(19) Europäisches Patentamt
European Patent Office
Office européen des brevets

(11) EP 0 787 831 A1

(12) # EUROPEAN PATENT APPLICATION
published in accordance with Art. 158(3) EPC

(43) Date of publication:
**06.08.1997 Bulletin 1997/32**

(21) Application number: **96926621.2**

(22) Date of filing: **09.08.1996**

(51) Int. Cl.[6]: **C23C 22/28**, C08L 57/00

(86) International application number:
**PCT/JP96/02270**

(87) International publication number:
**WO 97/07261 (27.02.1997 Gazette 1997/10)**

(84) Designated Contracting States:
**DE FR GB IT NL**

(30) Priority: **11.08.1995 JP 205963/95**
**23.02.1996 JP 36539/96**
**03.06.1996 JP 139353/96**

(71) Applicants:
- **NIPPON STEEL CORPORATION**
**Tokyo 100-71 (JP)**
- **Toyo Boseki Kabushiki Kaisha**
**Osaka-shi Osaka 530 (JP)**

(72) Inventors:
- **NAKAZAWA, Makoto**
**Nippon Steel Corporation**
**Futtsu-shi Chiba 299-12 (JP)**
- **IZAKI, Teruaki**
**Nippon Steel Corporation,**
**Kıtakyushu-shi Fukuoka 804 (JP)**
- **HAYASHI, Kımitaka**
**Nippon Steel Corporation,**
**Himeji-shi Hyogo 671-11 (JP)**
- **SUZUKI, Shinichi**
**Nippon Steel Corporation,**
**Aichi 476 (JP)**
- **MIYAUCHI, Yujiro**
**Nippon Steel Corporation,**
**Chiba 299-11 (JP)**
- **YOSHIDA, Kengo**
**Nippon Steel Corporation**
**Futtsu-shi Chiba 299-12 (JP)**
- **ODASHIMA, Hisao**
**Okayama 704 (JP)**
- **TAKAHASHI, Tomomi**
**Okayama 704 (JP)**
- **SHIBABUKI, Syuji**
**Okayama 701-02 (JP)**
- **FUJIOKA, Yuji**
**Nippon Steel Corporation**
**Technical**
**Kawasaki-shi Kanagawa 211 (JP)**
- **YAMAZAKI, Makoto**
**Nippon Steel Corporation**
**Kawasahi--shi Kanagawa 211 (JP)**
- **TADOKORO, Kenichiro**
**Nippon Steel Corporation**
**Kawasaki-shi Kanagawa 211 (JP)**

(74) Representative: **VOSSIUS & PARTNER**
**Siebertstrasse 4**
**81675 München (DE)**

(54) **RESIN-CHROMATE COMPOSITION AND SURFACE-TREATED METAL SHEET**

(57) A resin-chromate composition mainly comprising an emulsion of (a) an organic polymer composed of ethylenically unsaturated compounds in an aqueous medium, (b) a water-soluble chromium compound, and (c) a mineral acid, characterized in that the content of (a1) ethylenically unsaturated carboxylic acid components constituting the organic polymer (a) is more than 10 wt.% but below 30 wt.% based on the weight (in terms of solid matter) of the organic polymer (a), that of (a2) ethylenically unsaturated hydroxylated compound components constituting the polymer (a) is 0 wt.% or above but below 3 wt.% based thereon, and the balance is composed of (a3) ethylenically unsaturated compound components bearing neither carboxyl nor hydroxyl groups and that the content of components forming $C_3$-$C_7$ monocarboxylic acids in an aqueous solution of chromic acid and/or a chromate coat is 20 wt.% or below based on the weight (in terms of solid matter) of the organic polymer; and a metal sheet surface-treated with this composition. The above chromate composition is excellent in bath stability and smelling characteristics and the metal sheet surface-treated with the composition does not produce any putrid smell and is excellent in corrosion resistance, prevention of leaching of chromium, resistance to alkali, adhesion of paint, and appearance and quality.

EP 0 787 831 A1

F I G. 1

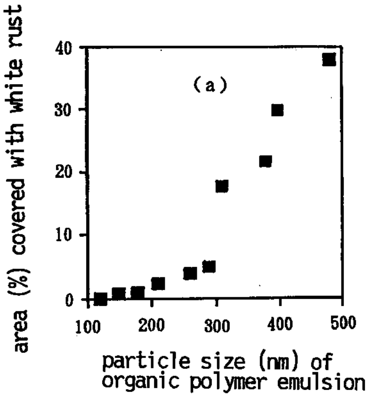
(a)
area (%) covered with white rust
40
30
20
10
0
100
200
300
400
500
particle size (nm) of organic polymer emulsion

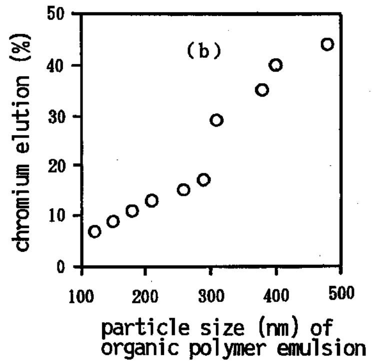
(b)
chromium elution (%)
50
40
30
20
10
0
100
200
300
400
500
particle size (nm) of organic polymer emulsion

**Description**

Technical Field

The present invention relates to a resin chromate composition superior in stability of bath and odor property, and to a resin chromate-treated metal plate which does not generate a putrefying odor and which is superior in corrosion resistance, slight solubility of chromium, alkali resistance, adhesion to paint and appearance. More particularly, the present invention mainly aims at providing a resin chromate-treated metal plate, which barely permits elution of chromium and has corrosion resistance, while ensuring continuous operability by maintaining superior stability of bath of the resin chromate composition.

Background Art

A chromate treatment has long been applied as an easy rust preventive treatment for metal surfaces. The treatment is broadly divided into electrolytic chromate and reactive type chromate mainly using trivalent chromium, and coating type chromate using hexavalent chromium wherein coating is dried without washing with water.

Recent wide application of chromate treatment to domestic appliances, building materials, automobiles and the like has produced various demands of the consumers towards properties. Superior appearance such as uniform tone and resistance to fingerprints, adhesion to paint, corrosion resistance in an unpainted state and after processing, slight solubility of chromium in dew or alkali used for degreasing, slidability during processing and the like are among the examples. Some of these are contradicting in principle as seen in the combination of slight solubility of chromium and corrosion resistance after processing, and it is not technically easy to realize all properties in a well-balanced manner.

For example, in an inorganic chromate conventionally used, which comprises chromic acid and an inorganic oxide such as silica, chromium is known to become less soluble by heating a chromate-treated metal plate at a high temperature of not less than 200°C, as partly disclosed in Japanese Patent Unexamined Publication No. 215683/1991. This method is not economical in view of the cost necessary for a drying device. As for corrosion resistance, a plate treated as above is inferior to a plate coated with an inorganic chromate which allows elution of chromium. Another method is known wherein both corrosion resistance and slight solubility of chromium are achieved by a two step treatment comprising subjecting a metal plate to an inorganic chromate treatment, drying and coating with a resin, followed by drying. This method is associated with problems of limitations on process, high cost and the like.

As disclosed in Japanese Patent Unexamined Publication Nos. 358082/1992 and 287548/1993, a water soluble or water dispersible resin such as polyacrylic acid, and a reducing agent such as alcohol are added to a chromate treatment bath to reduce and immobilize hexavalent chromium and to crosslink trivalent chromium in the resin. While this method makes chromium slightly soluble and improves the corrosion resistance of the chromate film as a result of barrier effect of the resin, it also degrades stability of bath due to gelling caused by reduction of hexavalent chromium in the treatment bath, since the bath contains a large amount of reducing components.

Japanese Patent Unexamined Publication No. 230666/1993 discloses a composition for treating metal surfaces, which achieves both slight solubility of chromium and high corrosion resistance. This is a resin chromate composition containing an organic polymer comprising carboxylic acid and a hydroxyl group at a certain ratio, and a water soluble chromium compound. This composition suffers from gelling, precipitation, separation and the like even after a few days' storage at 25°C, relative humidity 65%, and is not applicable to a long-term continuous operation at a metal surface treating line where the temperature of the treatment bath reaches 50°C. The chromate-treated metal plate obtained thereby is inferior in durability of paint.

Japanese Patent Unexamined Publication No. 145785/1989 discloses a composition of a hexavalent chromium compound and an acrylic polymer emulsion which is obtained by emulsion polymerization using a polyoxyethylene-polyoxypropylene block polymer emulsifier. This composition is stable for 3 weeks or longer even at 40°C by the effect of the emulsifier, whereas the emulsifier inhibits film forming to result in poor corrosion resistance and greater elusion of chromium.

The present inventors have found that a so-called resin chromate treatment including adding a resin to chromium acid is associated with, besides the problems shown by the above-mentioned known prior art, a problem of an incidence of putrefying odor generated from a chromate treatment bath and after forming a resin chromate film on a metal plate with the passage of time. The putrefying odor means a bad smell of the kind generated from ginkgo nuts, cheese in the maturing stage, excrement of human and animal, and the like. This phenomenon is more pronounced when metal plates are stored in accumulation, for example, in a coil. Occurrence of putrefying odor from a chromate treatment bath poses a problem for working environment at production site, and that from a metal plate poses a problem at a consumer side which can markedly impair the product value of a resin chromate-treated metal plate.

It is therefore an object of the present invention to provide a resin chromate composition superior in stability of bath and odor property, and a resin chromate-treated metal plate which does not generate a putrefying odor but is superior in corrosion resistance, prohibiting elution of chromium, alkali resistance, adhesion to paint, and appearance. The present invention particularly aims at providing a resin chromate-treated metal plate, which barely permits elution of chromium and exhibits excellent corrosion resistance, while ensuring continuous operability by maintaining superior stability of bath of the resin chromate composition.

Disclosure of the Invention

It has now been made possible to provide a resin chromate composition superior in stability of bath by appropriately adjusting, in a resin chromate composition mainly comprising (a) an organic polymer emulsion comprising the organic polymer comprising an unsaturated ethylene compound dispersed in an aqueous medium, (b) a water soluble chromium compound and (c) a mineral acid, the contents of an unsaturated ethylene carboxylic acid component (a1), a hydroxyl group-containing unsaturated ethylene compound component (a2) and an unsaturated ethylene compound component (a3) without a carboxylic group or a hydroxyl group of the organic polymer (a); and a metal plate treated with said resin chromate composition, which is superior in corrosion resistance, prohibiting elution of chromium, alkali resistance, adhesion to paint and appearance.

It is also possible to provide a resin chromate composition and resin chromate-treated metal plate superior in odor property by setting the amount of the component which is contained in the above-mentioned organic polymer (a) and produces a monocarboxylic acid having 3 to 7 carbon atoms in an aqueous chromic acid solution and/or a chromate film, to an amount not more than the predetermined amount.

It is further possible to improve corrosion resistance of a resin chromate-treated metal plate, particularly, corrosion resistance at the processed part, durability of paint adhesion and slight solubility of chromium, by adding (d) a water soluble and/or water dispersible additive to the above-mentioned organic polymer (a) in a predetermined amount and setting the lowest film forming temperature of an organic thin film prepared from a mixture of (a) and (d) to a temperature not more than the predetermined temperature.

The resin chromate composition and resin chromate-treated metal plate of the present invention are characterized by the following I - III.

I. The present invention is characterized in that the resin chromate composition comprises, as main components, (a) an organic polymer emulsion comprising the organic polymer comprising an unsaturated ethylene compound dispersed in an aqueous medium, (b) a water soluble chromium compound and (c) a mineral acid, wherein the organic polymer (a) consists of an unsaturated ethylene carboxylic acid component (a1) contained in a proportion of more than 10 wt% and less than 30 wt% of the weight of the organic polymer (solid), a hydroxyl group-containing unsaturated ethylene compound component (a2) contained in a proportion of not less than 0 wt% and less than 3 wt% of the weight of the organic polymer (solid), and an unsaturated ethylene compound component (a3) without a carboxylic group or a hydroxyl group, which is contained in the remaining proportion. The present invention is characterized in that the resin chromate-treated metal plate comprises a film of said resin chromate composition, the coating weight being 5-300 $mg/m^2$ when converted to metal chromium.

The organic polymer may be a copolymer comprising (a1), (a2) and (a3), or a mixture of a copolymer (A) comprising (a1) and (a3), and copolymer (B) comprising (a2) and (a3). When a mixture is used, since copolymer (B) is susceptible to oxidation in a treatment bath by chromic acid, copolymer (A) and a water soluble chromium compound are mixed and stirred first, and copolymer (B) is added thereto, whereby oxidation of hydroxyl group-containing component in the bath is inhibited, while after forming a film, since the hydroxyl group functions as a reducing functional group, slight solubility of chromium and stability of bath can be simultaneously achieved.

When the temperature of a dried plate is less than 90°C, the organic polymer preferably has a total Tg value as defined by the formula (1) of not less than -40°C and not more than 20°C:

$$1/\text{total Tg} = \sum_{i=1}^{n} \phi_i / Tg_i \quad (1)$$

wherein total Tg is Tg of the total organic polymer, $Tg_i$ is Tg of i component, $\phi_i$ is volume ratio of i component which is nearly the same as weight ratio, and n is the total number of monomer components.

When the above-mentioned mixture of (A) and (B) is used, $Tg_i$ of the monomer component of each copolymer and volume ratio of each component relative to the amount of the total organic polymer, which is nearly the same as weight ratio, are inserted into the formula (1).

The organic polymer emulsion preferably has a volume average particle size of from 50 nm to not more than 300 nm. When it falls between 50 nm and 300 nm, a solid resin chromate film is formed, which is particularly superior in corrosion resistance and inhibits elution of chromium, and the emulsion comes to have superior uniform dispersibility. The volume average particle size was determined by the dynamic diffusion method which can be performed by the use of ELS800 manufactured by OTSUKA ELECTRONICS CO., LTD.

The present invention I is described in detail in the following. The present inventors first conducted intensive studies to obtain a resin chromate composition superior in stability, which stands continuous operation in metal surface treatment line. As a result, they found that addition of a mineral acid such as phosphoric acid, sulfuric acid, hydrochloric acid and the like to a chromate bath, and adjusting the content of hydroxyl group-containing component in the organic polymer to less than 3 wt% and the total of hydroxyl group-containing component and an unsaturated ethylene carboxylic acid component in the organic polymer to mare than 10 wt%, led to a bath life at 50°C of about one month.

Then, they determined the amount of chromium eluted from a resin chromate-treated metal plate and found that greater amounts of the hydroxyl group-containing component in the organic polymer generally led to smaller amounts of eluted chromium, and that elution of chromium could be sufficiently suppressed by adjusting the content of the unsaturated ethylene carboxylic acid component to less than 30 wt% when hydroxyl group-containing component was contained in a proportion of less than 3 wt%.

Further studies in an attempt to improve adhesion to paint of the resin chromate-treated metal plate, particularly, long-term durability of paint adhesion, resulted in the finding that excellent adhesion could be attained when the unsaturated ethylene carboxylic acid component in the organic polymer exceeded 10 wt%. On the other hand, when it exceeded 30 wt%, the alkali resistance of the film was degraded. For a highly balanced durability of paint adhesion, corrosion resistance and alkali resistance, the unsaturated ethylene carboxylic acid component is preferably contained in a proportion of not less than 12 wt% and not more than 18 wt%. Other component in the organic polymer is an unsaturated ethylene compound component without a carboxylic group or a hydroxyl group.

Each component mentioned above is described in more detail in the following.

As the hydroxyl group-containing monomer component of the organic polymer, one or more monomers can be used, which is(are) selected from monomers having reducing hydroxyl group such as hydroxy (meth)acrylates [e.g., 2-hydroxyethyl (meth)acrylate, hydroxypropyl (meth)acrylate, 3-hydroxybutyl (meth)acrylate, 2,2-bis(hydroxymethyl)ethyl acrylate, 2,3-dihydroxypropyl (meth)acrylate and 3-chloro-2-hydroxypropyl (meth)acrylate], aryl alcohols and alcohol amides [e.g., N-methylol acrylamide and N-butoxymethylol (meth)acrylamide]; and monomers having a glycidyl group such as glycidyl (meth)acrylate, allylglycidyl ether, β-methylglycidyl (meth)acrylate and 3,4-epoxycyclohexylmethyl (meth)acrylate and monomers having an aldehyde group such as acrolein, both of which monomers being expected to have reactivity similar to that imparted by hydroxyl group in an acidic solution, with particular preference given to 2-hydroxyethyl (meth)acrylate and/or glycidyl (meth)acrylate. Note that "(meth)acrylate" means methacrylate and/or acrylate.

As the unsaturated ethylene carboxylic acid component of the organic polymer, for example, one or more acids selected from unsaturated ethylene monocarboxylic acids such as acrylic acid, methacrylic acid and chrotonic acid; unsaturated ethylene dicarboxylic acids such as itaconic acid, maleic acid and fumaric acid; and alkali metal salt, ammonium salt, organic amine salt and the like of the aforesaid carboxylic acid, can be used, with preference given to acrylic acid and/or methacrylic acid.

Other component of the organic polymer, namely, the unsaturated ethylene compound component without a carboxylic group or a hydroxyl group, means alkyl (meth)acrylate and other vinyl compounds. Examples of the alkyl (meth)acrylate include methyl (meth)acrylate, ethyl (meth)acrylate, butyl (meth)acrylate, hexyl (meth)acrylate, 2-ethylhexyl (meth)acrylate, octyl (meth)acrylate, lauryl (meth)acrylate, stearyl (meth)acrylate, setyl (meth)acrylate, dodecyl (meth)acrylate, phenyl (meth)acrylate and the like.

As the vinyl compounds, one or more aromatic vinyl compounds selected from styrene, α-methylstyrene, dimethylaminostyrene, dimethylaminostyrene (meth)acrylamide, vinyltoluene and chlorostyrene are recommended. One or more therefrom may be used, or a compound other than the aromatic vinyl compound may be concurrently used. It is also possible to add a compound other than those mentioned above as long as it is within the scope of the present invention.

When a film is formed at a plate temperature of less than 90°C in a drying step in the chromate treatment line, the total Tg value of the organic polymer obtained by the following formula (1) is preferably not more than 20°C. When it is not more than 20°C, whitening due to a defective film forming does not occur and corrosion resistance becomes sufficient. On the other hand, when it is not less than -40°C, the chromate film does not become sticky after drying, and the film is devoid of fingerprints or blocking when superimposing the plate. It is more preferable to set the total Tg value to not less than -20°C and not more than 10°C for compatible film forming property, resistance to fingerprints and blocking resistance.

$$1/\text{total Tg} = \sum_{i=1}^{n} \phi_i / Tg_i \qquad (1)$$

wherein total Tg is Tg of the total organic polymer, $Tg_i$ is Tg of i component, $\phi_i$ is volume ratio of i component which is nearly the same as weight ratio, and n is the total number of monomer components.

When drying at 90°C or more can be applied, the total Tg value of the organic polymer need not be limited to the above-mentioned range.

When the total Tg value of the organic polymer which is obtained by the formula (1) is adjusted to not less than -40°C and not more than 20°C, the Tg value of each component, i.e., $Tg_i$, and volume ratio $\phi_i$ which is nearly the same as weight ratio, need to be carefully determined. The finding that, when the aforementioned alkyl (meth)acrylate is methyl methacrylate, butyl methacrylate, phenyl methacrylate and the like, the Tg value can be raised, and when it is methyl acrylate, ethyl acrylate, propyl acrylate, butyl acrylate, 2-ethylhexyl acrylate and the like, the Tg value can be lowered, may be applied and the temperatures may be appropriately combined.

The organic polymer needs to be dispersed stably in an aqueous medium to give an emulsion. While the method for producing same is not particularly limited, a synthetic method by emulsion polymerization in an aqueous medium is preferable. In this case, the organic polymer is synthesized by conventional emulsion polymerization in the presence of a low molecular weight surfactant, a water soluble protecting colloid such as a water soluble polymer having higher molecular weight, water soluble oligomer and the like. An emulsion synthesized by the use of a low molecular weight surfactant is associated with problems of degraded water resistance and poor corrosion resistance of a film due to a residual low molecular weight surfactant in the emulsion particle interface after forming the film. Therefore, such low molecular weight surfactant is preferably not used for emulsion polymerization. On the other hand, the water soluble protecting colloid such as water soluble polymer having higher molecular weight and water soluble oligomer is associated with less problems such as those mentioned above, since high molecular chain is considered to maintain strong bond by entangling the emulsion particles and the emulsion particles are considered to cause crosslinking reaction after forming the film, and effective for improving stability of bath. Accordingly, such colloid can be used as long as it does not impair other properties of the film. Consequently, the organic polymer to be used in the present invention is preferably a soap-free emulsion which does not contain a low molecular weight surfactant.

As the water soluble chromium compound (b) in the present invention, chromic acid, chromate and dichromate such as anhydrous chromic acid, potassium dichromate, sodium dichromate, ammonium dichromate, barium chromate and strontium chromate, and reduced chromic acid and chromate partially reduced by starch, alcohol and the like, can be used. The reduction percentage of the chromic acid (salt) is not particularly limited, but determined to be in the following range when a certain property is particularly desired. For example, when slight solubility of chromium is desired, the reduction percentage is preferably selected from the range of 20-100%, and when corrosion resistance of the processed part is desired, the reduction percentage is preferably selected from the range of 0-70%.

While the ratio of the amounts of water soluble chromium compound and organic polymer emulsion in the resin chromate composition can be appropriately determined, the ratio of the weight of the water soluble chromium compound when converted to $CrO_3$, to that of the solid content of the organic polymer emulsion is generally about 1:1 - 1:20. While the thickness of the resin chromate can be appropriately determined, it is generally about 0.1 - 5 μm. In this case, while the concentration of chromic acid in the bath varies depending on coating method, chromic acid/resin ratio and desired film thickness, it is generally 5-100 g/ℓ when converted to $CrO_3$. While the concentration of organic polymer in the bath also varies as mentioned above, it is generally about 10-300 g/ℓ when converted to solid.

As the mineral acid (c) to be added to resin chromate, phosphoric acid, sulfuric acid, hydrochloric acid, nitric acid and the like can be used. It is preferably phosphoric acid from the aspect of corrosion resistance and stability of bath. The amount thereof to be added is not particularly limited, and an improved stability of bath can be attained by adding same in an amount capable of making its concentration (when converted to $H_3PO_4$) at least 1.2 times higher than that of chromic acid (when converted to $CrO_3$) in a bath. It is advantageous to limit the concentration of mineral acid (when converted to $H_3PO_4$) up to 4 times higher than that of chromic acid (when converted to $CrO_3$) in a bath for an unimpaired corrosion resistance.

Besides these, fluoride and inorganic sol such as silica, alumina, titania, zirconia and the like may be added as necessary to the resin chromate composition or film. In particular, colloidal silica is effective for improving corrosion resistance and adhesion to paint.

The resin chromate composition preferably adheres to the metal surface in a coating weight of 5-300 $mg/m^2$ when converted to metal chromium. When it is 5-300 $mg/m^2$, sufficient corrosion resistance can be achieved, which is economically beneficial.

The metal surface is treated with chromate by a conventional method such as coating with a roll coater, coating by a wringer roll, coating by immersion and air knife wringing, coating with a bar coater, coating by spraying, coating with a brush and the like. The coated surface is dried by a conventional method.

Examples of the metal plate to which the present invention can be applied include zinc-coated steel plate, steel plate coated with an alloy of zinc and a metal such as nickel, iron, aluminum, chromium, titanium, magnesium, manganium and the like, aluminum or aluminum alloy-coated steel plate, lead or lead alloy-coated steel plate, tin or tin alloy-coated steel plate, steel plate obtained by dispersing a small amount of a third metal and/or an inorganic substance such as silica, alumina, zirconia, titania and the like on the above-mentioned coated layers, cold rolled steel plate, hot rolled steel plate, silicon steel plate, zinc or zinc alloy plate, aluminum or aluminum alloy plate, magnesium or magnesium alloy plate, titanium or titanium alloy plate, stainless plate and the like.

II. The present invention is characterized in that, in a resin chromate composition comprising, as main components, (a) an organic polymer emulsion comprising the organic polymer comprising an unsaturated ethylene compound dispersed in an aqueous medium, (b) a water soluble chromium compound and (c) a mineral acid, the content of a component which produces monocarboxylic acid having 3 to 7 carbon atoms in an aqueous chromic acid solution and/or chromate film is not more than 20 wt% of the weight of the organic polymer. The present invention is characterized in that the resin chromate-treated metal plate comprises a film of said resin chromate composition in a coating weight of 5-300 mg/$m^2$ when converted to metal chromium.

In the above-mentioned unsaturated ethylene compound, a component which does not produce monocarboxylic acid having 3 to 7 carbon atoms, is one or more members selected from ester and/or ether synthesized from primary alcohol having 1, 2 or 8 or more carbon atoms and a chain isomer thereof, ester and/or ether synthesized from any secondary alcohol and ester and/or ether synthesized from any tertiary alcohol, and the component which produces monocarboxylic acid having 3 to 7 carbon atoms is preferably an ester and/or ether synthesized from a primary alcohol having 3 to 7 carbon atoms and a chain isomer thereof.

In the above-mentioned unsaturated ethylene compound, the component which does not produce monocarboxylic acid having 3 to 7 carbon atoms is more preferably an acrylate and/or a methacrylate.

The volume average particle size of the organic polymer emulsion is preferably 50-300 nm. When it falls within the range of 50-300 nm, a specifically solid resin chromate film can be formed, which is superior in corrosion resistance, slightly soluble property of chromium, and the emulsion comes to have superior uniform dispersibility. The volume average particle size here was determined by the dynamic diffusion method which can be performed by the use of ELS800 manufactured by OTSUKA ELECTRONICS CO., LTD.

The present invention II is described in detail in the following. The present inventors first studied as in the following to clarify the cause of the putrefying odor generated from the chromate treatment bath and chromate-treated metal plate. First, they prepared a resin chromate treatment bath comprising an acrylic resin containing, as a main component, butyl acrylate commonly used as an acrylate and treated a zinc-coated metal plate with chromate in said treatment bath. The treated surfaces were superimposed such that they face each other and left standing at room temperature for 3 days. The treatment bath was left standing at normal temperature for one week.

As a result, the treated steel plate and treatment bath both generated a putrefying odor. The odor component in the treated steel plate and treatment bath was analyzed to find that the cause of the putrefying odor was butyric acid (C=4). Similar tests were run with regard to resin chromates comprising an acrylic resin comprising other acrylate synthesized from alcohols having 1 to 8 carbon atoms, such as methyl acrylate (C=1), ethyl acrylate (C=2), propyl acrylate (C=3), pentyl acrylate (C=5), hexyl acrylate (C=6), heptyl acrylate (C=7) or 2-ethylhexyl acrylate (C=8) as a main component, and it was found that only those having 3 to 7 carbon atoms generated putrefying odor, and the odor was caused by the production of each corresponding lower carboxylic acid, namely, propionic acid (C=3), valeric acid (C=5), capronic acid (C=6) and heptanic acid (C=7).

Then, the reaction to generate such putrefying odor from a bath and a film was analyzed, and the mechanism of odor generation was found to be as in the following in every case. First, hydrolysis of acrylate which is the component copolymerized into the organic polymer produces primary alcohol having 3 to 7 carbon atoms, such as propanol, butanol, pentanol, hexanol and heptanol. These alcohols are oxidized in a bath or a film by the chromic acid component to give a lower carboxylic acid having the corresponding carbon number. These lower carboxylic acids generate a putrefying odor.

Thus, in the present invention, an organic polymer, wherein the total amount of the components producing the lower carboxylic acid having 3 to 7 carbon atoms is not more than 20 wt%, is mixed with a water soluble chromium compound to give a resin chromate composition. When the total amount is nil, a putrefying odor is not generated, which is most preferable, but when it is not more than 10 wt%, the putrefying odor is barely sensed. On the other hand, when it exceeds 20 wt%, the putrefying odor cannot be inhibited. Therefore, not more than 20 wt% in the total amount of the components producing the lower carboxylic acid having 3 to 7 carbon atoms includes a zero in the present invention. While the kind of organic polymer is not particularly limited, it is preferably an unsaturated ethylene compound. The method for dispersing an organic polymer in an aqueous medium is not particularly limited, and an emulsion comprising a hydrophobic component alone which is dispersed by an emulsifier, an emulsion comprising a hydrophobic component and a hydrophilic component which are dispersed by an emulsifier, or an emulsion comprising a hydrophobic component and a hydrophilic component, which are dispersed without an emulsifier, may be used.

Then, the present inventors have conducted intensive studies to obtain a resin chromate composition which is superior in stability and which stands continuous operation in a metal surface treatment line. As a result, addition of a mineral acid such as phosphoric acid, sulfuric acid, nitric acid, hydrochloric acid and the like to a chromate bath has been found to be effective. When the organic polymer is an unsaturated ethylene compound, addition of a hydroxyl group-containing component and an unsaturated ethylene carboxylic acid component as hydrophilic components in a proportion of the former of less than 3 wt% inclusive of zero and the total of the two of more than 10 wt% has been found to make bath life one month or longer even at 50°C.

Then, the resin chromate-treated metal plate has been examined for the slight solubility of chromium, and it has been found that greater amounts of the hydroxyl group-containing component in the organic polymer leads to smaller amounts of eluted chromium, and when the hydroxyl group-containing component is less than 3 wt% inclusive of zero, the elution of chromium can be sufficiently inhibited by setting the unsaturated ethylene carboxylic acid component to less than 30 wt%.

Then, the resin chromate-treated metal plate has been studied in an attempt to improve adhesion to paint, particularly durability of paint adhesion (wet durability), and it has been found that superior adhesion can be achieved when the organic polymer comprises an unsaturated ethylene carboxylic acid component in a proportion of more than 10 wt%. On the other hand, when it exceeds 30 wt%, corrosion resistance and alkali resistance become poor. For highly balanced durability of paint adhesion, corrosion resistance and alkali resistance, the unsaturated ethylene carboxylic acid component is preferably contained in a proportion of not less than 12 wt% and not more than 18 wt%.

Each of the above-mentioned resin components is described in more detail in the following.

The organic polymer usable in the present invention includes unsaturated ethylene compounds such as acrylate and/or methacrylate, vinyl carboxylate, vinyl ether, styrene, acrylamide, acrylonitrile and vinyl halide, epoxy, urethane, polyester and the like. As regards (meth)acrylate, vinyl carboxylate and vinyl ether, since alcohol, which is a starting material thereof, may be released in chromic acid bath due to hydrolysis, decomposition by oxidation and the like, and oxidized into lower carboxylic acid to generate a putrefying odor, the following should be used.

That is, one or more kinds of polymers selected from ester and/or ether synthesized from primary alcohol having 1, 2 or 8 or more carbon atoms and a chain isomer thereof, ester and/or ether synthesized from secondary alcohol and an ester and/or ether synthesized from tertiary alcohol. The chain isomer generally means isomers occurring from different carbon chain structures, and is exemplified by 2-methyl-1-propanol corresponding to 1-butanol, and 3-methyl-1-butanol and 2,2-dimethyl-1-propanol corresponding to 1-pentanol. Inasmuch as secondary and tertiary alcohols scarcely produce carboxylic acid even after oxidation in chromic acid, they can be used without limitation on carbon number.

Specific examples of alkyl/aryl of primary alcohol include methyl, ethyl, 2-ethylhexyl, lauryl, stearyl, octyl, isooctyl, nonyl, isononyl, dodecyl, dimethylaminoethyl, diethylaminoethyl, tert-butylaminoethyl, benzyl and the like; examples of alkyl/aryl of secondary alcohol include isopropyl, sec-butyl, cyclohexyl, cyclopentenyl, phenyl and the like; and examples of alkyl/aryl of tertiary alcohol include tert-butyl and the like.

Conversely, the component which cannot be added to the organic polymer emulsion in a proportion exceeding 20 wt% because it causes a putrefying odor is an ester and/or ether produced by primary alcohol having 3 to 7 carbon atoms and a chain isomer thereof, such as linear chain primary alcohol (e.g., n-propanol, n-butanol, n-pentanol, n-hexanol and n-heptanol) and branched chain primary alcohol (e.g., isobutanol and isopentanol).

These components can be contained as components constituting the organic polymer, residual oligomer or residual monomer by-produced in the synthesis of the organic polymer, or an alcohol produced by hydrolysis in the organic polymer emulsion.

Examples of the unsaturated ethylene compound component described above are shown in Table 1.

Table 1

| No. | classification | monomer component: name | monomer component: abbreviation | hydrolysis • oxide product in chromic acid solution/film | note |
|---|---|---|---|---|---|
| 1 | (meth)acrylate | iso-propyl acrylate | i-PA | acetone | components within the scope of claims |
| 2 | (meth)acrylate | sec-butyl acrylate | s-BA | methyl ethyl ketone | components within the scope of claims |
| 3 | (meth)acrylate | tert-butyl acrylate | t-BA | not oxidized | components within the scope of claims |
| 4 | (meth)acrylate | methyl methacrylate | MMA | formic acid(C=1)→ carbonic acid gas | components within the scope of claims |
| 5 | (meth)acrylate | 2-ethylhexyl acrylate | 2EHA | 2-ethylhexanoic acid (C=8) | components within the scope of claims |
| 6 | (meth)acrylate | lauryl methacrylate | LMA | lauric acid (C=12) | components within the scope of claims |
| 7 | (meth)acrylate | n-propyl acrylate | n-PA | propionic acid (C=3) | causative components of putrefying odor * |
| 8 | (meth)acrylate | n-butyl acrylate | n-BA | butyric acid (C=4) | causative components of putrefying odor * |
| 9 | (meth)acrylate | n-pentyl acrylate | n-PnA | valeric acid (C=5) | causative components of putrefying odor * |
| 10 | (meth)acrylate | n-hexyl acrylate | n-HxA | capronic acid (C=6) | causative components of putrefying odor * |
| 11 | (meth)acrylate | n-heptyl acrylate | n-HpA | heptanic acid (C=7) | causative components of putrefying odor * |
| 12 | (meth)acrylate | ethyl acrylate | EA | acetic acid (C=2) | components within the scope of claims |
| 13 | vinyl carboxylate | vinyl octylate | VOc | caprylic acid (C=8) | components within the scope of claims |
| 14 | vinyl ether | 2-ethylhexyl vinyl ether | 2EHV | 2-ethylhexanoic acid (C=8) | components within the scope of claims |
| 15 | others | styrene | St | not oxidized | components within the scope of claims |
| 16 | others | acrylamide | AAD | ″ | components within the scope of claims |

* can be contained up to 20 wt%

An emulsion comprising a hydrophobic component alone, wherein the organic polymer is dispersed by an emulsifier, an emulsion comprising a hydrophobic component and a hydrophilic component, wherein the organic polymer is dispersed by an emulsifier, or an emulsion comprising a hydrophobic component and a hydrophilic component, wherein the organic polymer is dispersed without an emulsifier can be used.

As the unsaturated ethylene carboxylic acid component of the organic polymer, for example, one or more members selected from unsaturated ethylene monocarboxylic acids such as acrylic acid, methacrylic acid and chrotonic acid; unsaturated ethylene dicarboxylic acids such as itaconic acid, maleic acid and fumaric acid; and alkali metal salt, ammonium salt, organic amine salt and the like of the aforesaid carboxylic acid, can be used, with preference given to acrylic acid and/or methacrylic acid.

As the hydroxyl group-containing component of the organic polymer, one or more monomers can be used which is(are) selected from monomers having reduced hydroxyl group such as hydroxy (meth)acrylates [e.g., 2-hydroxyethyl (meth)acrylate, 2-hydroxypropyl (meth)acrylate, hydroxybutyl (meth)acrylate, 3-hydroxybutyl (meth)acrylate, 2,2-bis(hydroxymethyl)ethyl (meth)acrylate, 2,3-dihydroxypropyl (meth)acrylate and 3-chloro-2-hydroxypropyl (meth)acrylate], aryl alcohols or alcohol amides [e.g., N-methylol acrylamide and N-butoxymethylol (meth)acrylamide]; and monomers having a glycidyl group such as glycidyl (meth)acrylate, arylglycidyl ether, β-methylglycidyl (meth)acrylate and 3,4-epoxycyclohexylmethyl (meth)acrylate, and monomers having an aldehyde group such as acrolein, both of which monomers being expected to have reactivity similar to that imparted by hydroxyl group in an acidic solution, with particular preference given to 2-hydroxyethyl (meth)acrylate and/or glycidyl (meth)acrylate. Note that the above-mentioned "(meth)" means those having "meth" and/or those not having "meth".

The concentration of the solid of the organic polymer in an aqueous medium can be appropriately determined as long as it does not prevent stable dispersion, which is generally about 5-50 wt%.

III. The present invention is characterized in that, in the resin chromate composition comprising, as main components, (a) an organic polymer emulsion comprising the organic polymer comprising an unsaturated ethylene compound dispersed in an aqueous medium, (b) a water soluble chromium compound, (c) a mineral acid and (d) a water soluble and/or water dispersible additive, the lowest film forming temperature of an organic thin film prepared from the mixture of (a) and (d) is not more than 20°C, and 2°C or more lower than the lowest film forming temperature of an organic thin film prepared from the organic polymer (a) alone. The present invention is characterized in that the resin chromate-treated metal plate comprises a film of said resin chromate composition in a coating weight of 5-300 $mg/m^2$ when converted to metal chromium.

The water soluble and/or water dispersible additive of the above-mentioned (d) preferably contains one or two members selected from monocarboxylic acid compound having 8 or more carbon atoms, derivative thereof, any polycarboxylic acid compound, derivative thereof, oligomer of any unsaturated carboxylic acid having 2 to 20 repeating units and water soluble organic solvent having an amide or cyclic carbonate structure, in a total proportion of 20 wt% or less relative to the total weight of the above-mentioned organic polymer (a).

The present invention III is described in detail in the following. The present inventors have conducted intensive studies to improve corrosion resistance, particularly corrosion resistance at the processed part, and durability of paint adhesion of the resin chromate-treated metal plate and slight solubility of chromium. As a result, they have found that when the lowest film-forming temperature of the organic thin film prepared from a mixture of an organic polymer emulsion and a water soluble and/or water dispersible additive is not more than 20°C and 2°C or more lower than the lowest film-forming temperature of the organic thin film prepared from organic polymer (a) alone, the metal plate having a film of a resin chromate composition comprising said mixture, a water soluble chromium compound and a mineral acid as main components becomes superior in the above-mentioned properties. When the lowest film-forming temperature of the organic thin film exceeds 20°C, the chromate-treated metal plate processed at room temperature comes to have poor corrosion resistance at the processed part. In addition, when a fall in the lowest film-forming temperature due to the addition of (d) is less than 2°C, the corrosion resistance at the processed part cannot be improved appreciably.

The water soluble and/or water dispersible additive usable in the present invention is not particularly limited as long as it can meet the above-mentioned requirement as regards the lowest film-forming temperature when mixed with an organic polymer emulsion. For example, monocarboxylic acid compounds having 8 or more carbon atoms such as caprylic acid, pelargonic acid and capric acid; dicarboxylic acid compounds such as oxalic acid, malonic acid, maleic acid, fumaric acid, glutaric acid, adipic acid, pimelic acid and tartronic acid; alkyl ester derivatives of dicarboxylic acid such as diethyl malonate, dimethyl glutarate and diisopropyl glutarate; hydroxyl group-containing polycarboxylic acid compounds such as malic acid, tartaric acid and citric acid; amino group-containing polycarboxylic acid compounds such as glutamic acid; oligomers having 2-20 repeating units including one or more acids from acrylic acid and methacrylic acid; organic amide solvents such as dimethylformamide and dimethylacetamide; organic cyclic carbonate solvents such as ethylene carbonate and propylene carbonate; and the like can be used.

The additive is preferably contained in a proportion of not more than 20 wt% of the entire weight of the organic polymer. When it exceeds 20 wt%, the superior properties of the organic polymer are impaired, which brings about poor corrosion resistance, nonuniform appearance, degraded stability of bath of the composition, and the like.

The lowest film-forming temperature of the organic thin film was determined according to the temperature gradient method devised by Plotzman. Specifically, the both ends of an aluminum plate are folded at right angle. One end is placed in a low temperature tank at -20°C and the other end in a high temperature tank at 20°C to render a temperature gradient to the aluminum plate. The temperature at each point of the plate was measured by inserting a thermocouple into holes made on the side of the plate at certain intervals. When the temperature was stabilized, a mixture of an organic polymer emulsion and a water soluble and/or water dispersible additive was applied to the surface of the plate and dried. The border of the transparent portion and the portion whitened as a result of defective film forming was determined. The temperature of the plate at said border was measured and taken as the lowest film-forming temperature.

Brief Description of the Drawing

Fig. 1 is a graph showing a plate corrosion resistance and chromium elution determined in Example 4.

The present invention is described in more detail by way of illustrative Examples and Comparative Examples in the following.

Example 1

(1) Synthesis of carboxylic acid, hydroxyl group-containing emulsion

Deionized water (400 parts, part by weight, hereinafter the same) was placed in a reaction tank, and heated to a liquid temperature of 60°C. A solution of a monomer mixture (400 parts) having the copolymerization proportion of each of A to Z as shown in Table 2 and ammonium persulfate (4 parts) in deionised water (96 parts), and a solution of acidic sodium sulfite (4 parts) in deionized water (96 parts) were simultaneously added dropwise thereto with stirring over 2 hours, and the mixture was stirred at 60°C for 3 hours to allow polymerization, whereby a carboxylic acid, hydroxyl group-containing emulsion was synthesized. The volume average particle size of the emulsion was 120-280 nm.

(2) Resin chromate composition

A bath of a resin chromate composition containing a partially reduced chromic acid (reduction percentage 40%) in a proportion of 30 g/ℓ when converted to $CrO_3$, phosphoric acid in a proportion of 45 g/ℓ when converted to $H_3PO_4$ and the organic polymer emulsion as shown in Table 2 in a solid content of 180 g/ℓ was prepared. For comparison, a bath without a resin was also used.

Table 2

| No. | copolymerization proportion (wt%) | | | | Tg (℃) of organic polymer | note |
|---|---|---|---|---|---|---|
| | hydroxyl group-containing monomer | carboxylic aicd-containing monomer | monomer having high Tg | monomer having low Tg | | |
| A | HEA=0.3, GMA=0.2 | MAA = 14 | St = 15.5 | n-BA = 70 | -22 | Example of present invention |
| B | none | AA = 11 | MMA = 20 | EA = 69 | 7 | |
| C | HEMA=2.9 | MAA = 14 | MMA = 14<br>St = 15 | n-BA = 54.1 | -1 | |
| D | HEA=2.5 | MAA = 29 | MMA = 15 | n-BA = 53.5 | 1 | |
| E | none | MAA = 14 | none | n-BA = 86 | -39 | |
| F | HEA= 1 | MAA = 14 | MMA = 44 | n-BA = 41 | 20 | |
| V | HEA=2.5 | MAA = 10 | MMA = 7.5<br>St = 10 | EA = 70 | 5 | Comparative Example |
| W | HEMA= 1 | AA = 30 | MMA = 19 | n-BA = 50 | 4 | |
| X | HEA= 3 | AA = 14 | MMA = 13 | n-BA = 70 | -25 | |
| Y | GMA=0.2<br>HEA=0.3 | MAA = 11 | St = 7.5 | 2EHA = 15<br>n-BA = 67 | -41 | Example of present invention |
| Z | none | MAA = 25 | MMA = 33<br>St = 1 | n-BA = 41 | 22 | |

Tg : glass transition temperature
MMA : methyl methacrylate
St : styrene
MAA : methacrylic acid
HEA : 2-hydroxyethyl acrylate
HEMA : 2-hydroxyethyl methacrylate
GMA : glycidyl methacrylate
n-BA : butyl acrylate
EA : ethyl acrylate
AA : acrylic acid
2EHA : 2-ethylhexyl acrylate

(3) Kind of metal plate

As the metal plates subjected to chromate treatment, the following were used.

EG : zinc-electrogalvanized steel plate (coating weight 20 $g/m^2$)
GI : zinc hot-dip galvanized steel plate (coating weight 90 $g/m^2$)
SZ : zinc-aluminum alloy hot-dip galvanized steel plate (coating weight 120 $g/m^2$, AL/Zn=5/95)
GA : alloyed zinc hot-dip galvanized steel plate (coating weight 45 $g/m^2$, Fe/Zn=15/85)
AL : aluminum hot-dip galvanized steel plate (coating weight 120 $g/m^2$)

(4) Method of chromate treatment

A roll coater was used and the plates were dried at a plate arrival temperature of 60°C. The coating weight was 3-300 $mg/m^2$ when converted to metal Cr.

(5) Aging

A resin chromate-treated film has increasing film forming property with the passage of time even at a normal temperature. In view of this, aging at 40°C was applied for 3 days to complete the film forming.

(6) Method for evaluation of properties

Evaluation was performed with regard to the following items.

1) stability of bath : Resin chromate composition was placed in a dryer at 50°C, and the number of days passed until occurrence of abnormalities such as gelling, precipitation, separation and the like was counted and recorded.
2) Corrosion resistance : Proportion of area suffered from occurrence of rust after spraying salt water (5%, 35°C) to samples was examined. Spraying period was 7 days for EG, 10 days for GI, SZ and GA, and 15 days for AL, in all of which cases the area where white rust occurred was measured.

◎ no occurrence of rust
○ occurrence of rust in less than 5%
△ occurrence of rust in not less than 5% and less than 20%
X occurrence of rust in not less than 20%

3) Corrosion resistance at processed part : Samples were subjected to Erichsen processing to render their height 7 mm and subjected to salt water spray test as in 2), followed by measurement of area of the processed part where rust occurred. Test period was 3 days for EG, GI, SZ and GA, and 5 days for AL, in all of which cases the area where white rust occurred was measured.

◎ no occurrence of rust
○ occurrence of rust in less than 5%
△ occurrence of rust in not less than 5% and less than 20%
X occurrence of rust in not less than 20%

4) Elution of chromium : Samples were immersed in boiling water for 30 minutes and variation of coating weight of chromium was determined by measuring the coating weight of chromium before and after the immersion.

◎ $\Delta Cr < 5\%$
○ $5\% \leqq \Delta Cr < 10\%$
△ $10\% \leqq \Delta Cr < 20\%$
X $20\% \leqq \Delta Cr$

5) Adhesion to paint : Melamine alkyd paint (20 μm) was applied to the samples and dried. The samples were immersed in boiling water for 30 minutes. Immediately thereafter, the proportion of the area where the film peeled off was determined by cross-cut adhesion test (1 mm cross score 10 × 10, tape peeling).

◎ release percentage less than 5%
○ release percentage not less than 5% and less than 10%

△ release percentage not less than 10% and less than 20%
X release percentage more than 20%

6) Alkali resistance : A weak alkaline degreased liquid having a pH of 10 was sprayed on samples for 3 minutes, and variation of coating weight of chromium was determined by measuring the coating weight of chromium before and after the spraying.

◎ $\Delta Cr < 5\%$
○ $5\% \leqq \Delta Cr < 10\%$
△ $10\% \leqq \Delta Cr < 20\%$
X $20\% \leqq \Delta Cr$

7) Tone : Yellowness index (YI) of samples was determined by color-difference meter. Smaller YIs make samples look uniformly whiter in appearance.

◎ $YI < -1.0$
○ $-1 \leqq YI < 1$
△ $1 \leqq YI < 5$
X $5 \leqq YI$

8) Resistance to fingerprints : Thumb was pressed against samples and noticeability of the fingerprint was visually evaluated.

◎ trace of fingerprint not discriminated
○ trace of fingerprint slightly discriminated
△ trace of fingerprint easily discriminated
X trace of fingerprint discriminated from distance

The results are shown in Table 3. As is evident from the Table, the samples of the present invention were superior in stability of bath, corrosion resistance, corrosion resistance at processed part, elution of chromium, adhesion to paint, alkali resistance, tone and resistance to fingerprints.

Table 3

| No. | sample mode: organic polymer | sample mode: metal plate | sample mode: coating weight of Cr ($mg/m^2$) | property evaluation: stability of bath (days) | property evaluation: corrosion resistance | property evaluation: corrosion resistance at processed part | property evaluation: elution of chromium | property evaluation: adhesion to paint | property evaluation: alkali resistance | property evaluation: tone | property evaluation: resistance to finger-print | note |
|---|---|---|---|---|---|---|---|---|---|---|---|---|
| 1 | A | EG | 30 | 30< | ○ | ◎ | ○ | ○ | ○ | ◎ | ◎ | Ex. of Pres. Inv. |
| 2 | B | EG | 30 | 30< | ○ | ○ | ○ | △ | ○ | ◎ | ◎ | |
| 3 | C | EG | 30 | 30 | ○ | ○ | ○ | ○ | ○ | ◎ | ◎ | |
| 4 | D | EG | 30 | 30< | ○ | ○ | ○ | ◎ | △ | ◎ | ◎ | |
| 5 | A | GI | 30 | 30< | ◎ | ◎ | ○ | ○ | ○ | ◎ | ◎ | |
| 6 | A | SZ | 30 | 30< | ◎ | ○ | ○ | ○ | ○ | ◎ | ◎ | |
| 7 | A | AL | 30 | 30< | ◎ | ○ | ○ | ○ | ○ | ◎ | ◎ | |
| 8 | A | GA | 30 | 30< | ◎ | ◎ | △ | ◎ | ○ | ◎ | ◎ | |
| 9 | A | EG | 5 | 30< | △ | △ | ○ | ○ | ○ | ◎ | ○ | |
| 10 | A | EG | 100 | 30< | ◎ | ◎ | ○ | ○ | ○ | ○ | ◎ | |
| 11 | A | EG | 300 | 30< | ◎ | ◎ | ○ | ○ | ○ | △ | ◎ | |
| 12 | none | EG | 30 | 30< | ○ | ○ | × | △ | × | ○ | ○ | Comp. Ex. |
| 13 | V | EG | 30 | 30< | ○ | ○ | ○ | × | ○ | ◎ | ◎ | |
| 14 | W | EG | 30 | 30< | △ | × | ○ | ◎ | × | ◎ | ◎ | |
| 15 | X | EG | 30 | 22 | ○ | △ | ◎ | ○ | ○ | ◎ | ◎ | |
| 16 | A | EG | 3 | 30< | × | × | ○ | ○ | ○ | ◎ | △ | |

Example 2

(1) Synthesis of carboxylic acid, hydroxyl group-containing emulsion

In the same manner as in Example 1, the carboxylic acid, hydroxyl group-containing emulsions shown in Table 2 were synthesized.

(2) Resin chromate composition

A bath of a resin chromate composition containing a partially reduced chromic acid (reduction percentage 55%) in a proportion of 20 g/ℓ when converted to $CrO_3$, phosphoric acid in a proportion of 45 g/ℓ when converted to $H_3PO_4$, the organic polymer emulsion as shown in Table 2 in a solid content of 80 g/ℓ and colloidal silica in a proportion of 35 g/ℓ when converted to $SiO_2$ was prepared. For comparison, a bath without a resin was also prepared.

(3) Kind of metal plate

In the same manner as in Example 1, EG, GI, SZ, GA and AL were used.

(4) Method of chromate treatment

Metal plates were immersed in a resin chromate bath, which was adjusted with air knife to make the coating weight 30 mg/$m^2$ when converted to metal Cr, and dried at a plate arrival temperature of 60°C. The film thickness was about 0. 4 μm.

(5) Method for evaluation of properties

Evaluation was done in the same manner as in Example 1.

The results are shown in Tables 4-8. In every plated steel plate, the present invention showed superior properties.

Table 4

| No. | sample mode | | | property evaluation | | | | | | | | note |
|---|---|---|---|---|---|---|---|---|---|---|---|---|
| | organic polymer | metal plate | coating weight of Cr ($mg/m^2$) | stability of bath (days) | corrosion resistance | corrosion resistance at processed part | elution of chromium | adhesion to paint | alkali resistance | tone | resistance to fingerprint | |
| 1 | A | EG | 30 | 30< | ○ | ○ | ○ | ○ | ○ | ◎ | ◎ | Ex. of Pres. Inv. |
| 2 | B | EG | 30 | 30< | ○ | ○ | ○ | △ | ○ | ◎ | ◎ | |
| 3 | C | EG | 30 | 30 | ○ | ○ | ◎ | ○ | ○ | ◎ | ◎ | |
| 4 | D | EG | 30 | 30< | ○ | ○ | ◎ | ◎ | △ | ◎ | ◎ | |
| 5 | E | EG | 30 | 30< | ○ | ○ | ○ | △ | ○ | ◎ | △ | |
| 6 | F | EG | 30 | 30< | ○ | △ | ○ | ○ | ○ | ◎ | ◎ | |
| 7 | none | EG | 30 | 30< | ○ | ○ | × | △ | × | ○ | ○ | Comp. Ex. |
| 8 | V | EG | 30 | 30< | ○ | ○ | ◎ | × | ○ | ◎ | ◎ | |
| 9 | W | EG | 30 | 30< | △ | × | ○ | ◎ | × | ◎ | ◎ | |
| 10 | X | EG | 30 | 16 | ○ | △ | ◎ | ○ | ○ | ◎ | ◎ | |

Table 5

| No. | sample mode | | | property evaluation | | | | | | | | note |
|---|---|---|---|---|---|---|---|---|---|---|---|---|
| | organic polymer | metal plate | coating weight of Cr (mg/m²) | stability of bath (days) | corrosion resistance | corrosion resistance at processed part | elution of chromium | adhesion to paint | alkali resistance | tone | resistance to fingerprint | |
| 1 | A | GI | 30 | 30< | ◎ | ◎ | ○ | ○ | ○ | ◎ | ◎ | Ex. of Pres. Inv. |
| 2 | B | GI | 30 | 30< | ◎ | ◎ | ○ | △ | ○ | ◎ | ◎ | |
| 3 | C | GI | 30 | 30 | ◎ | ◎ | ◎ | ○ | ○ | ◎ | ◎ | |
| 4 | D | GI | 30 | 30< | ◎ | ◎ | ○ | ◎ | △ | ◎ | ◎ | |
| 5 | E | GI | 30 | 30< | ◎ | ◎ | ○ | △ | ○ | ◎ | △ | |
| 6 | F | GI | 30 | 30< | ◎ | ◎ | ○ | ○ | ○ | ◎ | ◎ | |
| 7 | none | GI | 30 | 30< | ○ | △ | × | × | × | ○ | ○ | Comp. Ex. |
| 8 | V | GI | 30 | 30< | ◎ | ◎ | ○ | × | ○ | ◎ | ◎ | |
| 9 | W | GI | 30 | 30< | ○ | △ | ○ | ◎ | × | ◎ | ◎ | |
| 10 | X | GI | 30 | 16 | ◎ | ○ | ◎ | ○ | ○ | ◎ | ◎ | |

Table 6

| No. | sample mode | | | property evaluation | | | | | | | | note |
|---|---|---|---|---|---|---|---|---|---|---|---|---|
| | organic polymer | metal plate | coating weight of Cr ($mg/m^2$) | stability of bath (days) | corrosion resistance | corrosion resistance at processed part | elution of chromium | adhesion to paint | alkali resistance | tone | resistance to fingerprint | |
| 1 | A | SZ | 30 | 30< | ◎ | ○ | ○ | ○ | ○ | ◎ | ◎ | Ex. of Pres. Inv. |
| 2 | B | SZ | 30 | 30< | ◎ | ○ | ○ | △ | ○ | ◎ | ◎ | |
| 3 | C | SZ | 30 | 30< | ◎ | ○ | ◎ | ○ | ○ | ◎ | ◎ | |
| 4 | D | SZ | 30 | 30< | ◎ | ○ | ○ | ◎ | △ | ◎ | ◎ | |
| 5 | E | SZ | 30 | 30< | ◎ | ○ | ○ | △ | ○ | ◎ | △ | |
| 6 | F | SZ | 30 | 30< | ◎ | ○ | ○ | ○ | ○ | ◎ | ◎ | |
| 7 | none | SZ | 30 | 30< | ○ | △ | × | × | × | ○ | ○ | Comp. Ex. |
| 8 | V | SZ | 30 | 30< | ◎ | ○ | ○ | × | ○ | ◎ | ◎ | |
| 9 | W | SZ | 30 | 30< | ○ | × | ○ | ◎ | × | ◎ | ◎ | |
| 10 | X | SZ | 30 | 16 | ◎ | ○ | ◎ | ○ | ○ | ◎ | ◎ | |

Table 7

| No. | sample mode | | | property evaluation | | | | | | | | note |
|---|---|---|---|---|---|---|---|---|---|---|---|---|
| | organic polymer | metal plate | coating weight of Cr ($mg/m^2$) | stability of bath (days) | corrosion resistance | corrosion resistance at processed part | elution of chromium | adhesion to paint | alkali resistance | tone | resistance to fingerprint | |
| 1 | A | GA | 30 | 30< | ◎ | ◎ | △ | ◎ | ○ | ◎ | ◎ | Ex. of Pres. Inv. |
| 2 | B | GA | 30 | 30< | ◎ | ◎ | △ | ○ | ○ | ◎ | ◎ | |
| 3 | C | GA | 30 | 30< | ◎ | ◎ | ○ | ◎ | ○ | ◎ | ◎ | |
| 4 | D | GA | 30 | 30< | ◎ | ◎ | △ | ◎ | △ | ◎ | ◎ | |
| 5 | E | GA | 30 | 30< | ◎ | ◎ | △ | ○ | ○ | ◎ | △ | |
| 6 | F | GA | 30 | 30< | ◎ | ◎ | △ | ◎ | ○ | ◎ | ◎ | |
| 7 | none | GA | 30 | 30< | ○ | △ | × | △ | × | ○ | ○ | Comp. Ex. |
| 8 | V | GA | 30 | 30< | ◎ | ◎ | △ | × | ○ | ◎ | ◎ | |
| 9 | W | GA | 30 | 30< | ○ | △ | △ | ◎ | × | ◎ | ◎ | |
| 10 | X | GA | 30 | 16 | ◎ | ○ | ○ | ○ | ○ | ◎ | ◎ | |

Table 8

| No | sample mode | | | property evaluation | | | | | | | | note |
|---|---|---|---|---|---|---|---|---|---|---|---|---|
| | organic polymer | metal plate | coating weight of Cr ($mg/m^2$) | stability of bath (days) | corrosion resistance | corrosion resistance at processed part | elution of chromium | adhesion to paint | alkali resistance | tone | resistance to fingerprint | |
| 1 | A | AL | 30 | 30< | ◎ | ○ | ○ | ○ | ○ | ◎ | ◎ | Ex. of Pres. Inv. |
| 2 | B | AL | 30 | 30< | ◎ | ○ | ○ | △ | ○ | ◎ | ◎ | |
| 3 | C | AL | 30 | 30< | ◎ | ○ | ◎ | ○ | ○ | ◎ | ◎ | |
| 4 | D | AL | 30 | 30< | ◎ | ○ | ○ | ◎ | △ | ◎ | ◎ | |
| 5 | E | AL | 30 | 30< | ◎ | ○ | ○ | △ | ○ | ◎ | △ | |
| 6 | F | AL | 30 | 30< | ◎ | ○ | ○ | ○ | ○ | ◎ | ◎ | |
| 7 | none | AL | 30 | 30< | ○ | △ | × | × | × | ○ | ○ | Comp. Ex. |
| 8 | V | AL | 30 | 30< | ◎ | ○ | ○ | × | ○ | ◎ | ◎ | |
| 9 | W | AL | 30 | 30< | ○ | × | ○ | ◎ | × | ◎ | ◎ | |
| 10 | X | AL | 30 | 16 | ◎ | ○ | ◎ | ○ | ○ | ◎ | ◎ | |

Example 3

(1) Synthesis of carboxylic acid, hydroxyl group-containing emulsion

Emulsion was selected from those recited in Table 2 and used.

(2) Resin chromate composition

A bath of a resin chromate composition containing a partially reduced chromic acid (reduction percentage 70%) in a proportion of 30 g/ℓ when converted to $CrO_3$, phosphoric acid in a proportion of 70 g/ℓ when converted to $H_3PO_4$, the organic polymer emulsion in a solid content of 75 g/ℓ and colloidal silica in a proportion of 10 g/ℓ when converted to $SiO_2$ was prepared.

(3) Kind of metal plate

In the same manner as in Example 1, GI was used.

(4) Method of chromate treatment

Using a roll coater, the coating weight was adjusted to 30 mg/$m^2$ when converted to metal Cr, and samples were dried at a plate arrival temperature of 60-90°C. The film thickness was about 0.3 μm.

(5) Method for evaluation of properties

Evaluation was done in the same manner as in Example 1 except that the following evaluation item was added.

1) film forming property : Metal plates were subjected to chromate treatment and dried at a predetermined temperature. The treated surface was scratched with nail and peeling or non-peeling of the film was visually confirmed.

○ no peeling
△ partial peeling
X peeling on entire surface

The results are shown in Table 9. When a plate is dried at a plate arrival temperature of less than 90°C, the organic polymer preferably has total Tg of not less than -40°C and not more than 20°C.

Table 9

| No. | sample mode | | | | property evaluation | | | | | | | | |
|---|---|---|---|---|---|---|---|---|---|---|---|---|---|
| | organic polymer | | metal plate | Temperature of dried plate (℃) | stability of bath (days) | film forming property | corrosion resistance | corrosion resistance at processed part | elution of chromium | adhesion to paint | alkali resistance | tone | resistance to fingerprint |
| | kind | Total Tg (℃) | | | | | | | | | | | |
| 1 | none | | GI | 60 | 30< | ○ | ○ | △ | × | × | × | ○ | ○ |
| 2 | E | -39 | GI | 60 | 30< | ○ | ◎ | ○ | ○ | △ | ○ | ◎ | △ |
| 3 | F | 20 | GI | 60 | 30< | ○ | ◎ | ○ | ○ | ○ | ○ | ◎ | ◎ |
| 4 | Y | -41 | GI | 60 | 30< | ○ | ◎ | ○ | ○ | △ | ○ | ◎ | × |
| 5 | Z | 22 | GI | 60 | 30< | △ | ○ | △ | △ | ○ | ○ | ◎ | ◎ |
| 6 | Y | -41 | GI | 85 | 30< | ○ | ◎ | ○ | ○ | △ | ○ | ◎ | △ |
| 7 | Z | 22 | GI | 85 | 30< | △ | ○ | △ | △ | ○ | ○ | ◎ | ◎ |
| 8 | E | -39 | GI | 90 | 30< | ○ | ◎ | ○ | ○ | △ | ○ | ◎ | ○ |
| 9 | F | 20 | GI | 90 | 30< | ○ | ◎ | ○ | ○ | ○ | ○ | ◎ | ◎ |
| 10 | Y | -41 | GI | 90 | 30< | ○ | ◎ | ○ | ○ | △ | ○ | ◎ | ○ |
| 11 | Z | 22 | GI | 90 | 30< | ○ | ◎ | ○ | ○ | ○ | ○ | ◎ | ◎ |
| 12 | none | | GI | 90 | 30< | ○ | ○ | △ | × | × | △ | ○ | ○ |

Example 4

(1) Synthesis of carboxylic acid, hydroxyl group-containing emulsion

Emulsion B shown in Table 2 was synthesized. By appropriately changing temperature of reaction liquid and amount of polymerization catalyst, the volume average particle size of the emulsion was varied from 120 nm to 480 nm.

(2) Resin chromate composition

A bath of a resin chromate composition containing a partially reduced chromic acid (reduction percentage 30%) in a proportion of 9 g/ℓ when converted to $CrO_3$, phosphoric acid in a proportion of 18 g/ℓ when converted to $H_3PO_4$, the organic polymer emulsion in a solid content of 45 g/ℓ and colloidal silica in a proportion of 15 g/ℓ when converted to $SiO_2$ was prepared.

(3) Kind of metal plate

EG was used.

(4) Method of chromate treatment

A resin chromate composition was sprayed on the plates and the coating weight was adjusted with air knife to 30 $mg/m^2$ when converted to metal Cr. The samples were dried at a plate arrival temperature of 100°C. The film thickness was about 0.5 μm.

(5) Method for evaluation of properties

In the same manner as in Example 1, plate corrosion resistance and elution of chromium were examined.

The results are shown in Table 1. When the volume average particle size of the emulsion was not more than 300 nm, superior corrosion resistance and slight solubility of chromium were obtained.

Example 5

(1) Synthesis of carboxylic acid, hydroxyl group-containing emulsion

The organic polymers A and B as shown in Table 10 were synthesized. The volume average particle size was 100-280 nm.

Table 10

| polymer | symbol | copolymerization proportion (wt%) | | | | | | | | Tg of polymer (℃) |
|---|---|---|---|---|---|---|---|---|---|---|
| | | carboxyl group-containing monomer | | hydroxyl group-containing monomer | | monomer having high Tg | | monomer having low Tg | | |
| | | monomer | proportion | monomer | proportion | monomer | proportion | monomer | proportion | |
| A | A-1 | MAA | 20 | | | MMA | 20 | n-BA | 60 | - 8 |
| | A-2 | MAA | 30 | | | MMA | 20 | n-BA | 50 | + 8 |
| | A-3 | AA | 20 | | | MMA | 20 | n-BA | 60 | -10 |
| | A-4 | AA | 30 | | | MMA | 20 | n-BA | 50 | + 4 |
| | A-5 | MAA | 50 | | | MMA | 20 | n-BA | 30 | +45 |
| B | B-1 | | | HEA | 3 | MMA | 40 | n-BA | 57 | - 8 |
| | B-2 | | | HEA | 5 | MMA | 40 | n-BA | 55 | - 7 |
| | B-3 | | | HEA | 10 | MMA | 40 | n-BA | 50 | - 5 |

MAA : methacrylic acid

AA : acrylic acid

HEA : 2-hydroxyethyl acrylate

MMA : methyl methacrylate

n-BA : butyl acrylate

(2) resin chromate composition

A bath of a resin chromate composition containing chromic acid partially reduced by starch in a proportion of 30 g/ℓ

when converted to $CrO_3$, phosphoric acid in a proportion of 60 g/ℓ when converted to $H_3PO_4$ and an organic polymer emulsions A and B in a combined proportion of 100 g/ℓ in a solid content was prepared. To be specific, the partially reduced chromic acid and phosphoric acid were thoroughly mixed. Then, the organic polymer (A) was added and the mixture was thoroughly mixed. Finally, organic polymer (B) was added and mixed to give a bath. For comparison, a bath without a resin was also prepared.

(3) Kind of metal plate

GI, EG, SZ, AL and cold drawn steel plate (CR) were used.

(4) Method of chromate treatment

Treated using a roll coater and dried at a plate arrival temperature of 100°C.

(5) Method for evaluation of properties

Evaluated in the same manner as in Example 1. With regard to CR, plate corrosion resistance was examined after spraying salt water for 5 days and corrosion resistance at processed part was examined after spraying salt water for 3 days by measuring the rusted area.

The results are shown in Table 11. The products of the present invention were superior in stability of bath, corrosion resistance, corrosion resistance at processed part, slight solubility of chromium, adhesion to paint, alkali resistance, appearance and resistance to fingerprints.

Table 11

| No. | sample mode | | | | property evaluation | | | | | | | | | note |
|---|---|---|---|---|---|---|---|---|---|---|---|---|---|---|
| | organic polymer | | | coating amount of Cr ($mg/m^2$) | stability of bath (day) | metal plate | corrosion resistance | corrosion resistance at processed part | elution of chromium | adhesion to paint | alkali resistance | appearance | resistance to fingerprint | |
| | A | B | monomer composition (wt%) | | | | | | | | | | | |
| 1 | A-1 (50) | B-1 (50) | MAA:10, HEA :1.5 MMA:30, n-BA:58.5 | 60 | 40< | EG | ◎ | ◎ | ◎ | ○ | ◎ | ◎ | ◎ | Ex. of Pres. Inv. |
| | | | | | | GI | ◎ | ◎ | ◎ | ○ | ◎ | ◎ | ◎ | |
| 2 | A-1 (75) | B-1 (25) | MAA:15, HEA :0.75 MMA:25, n-BA:59.25 | 60 | 40< | EG, SZ, AL | ◎ | ◎ | ◎ | ◎ | ○ | ◎ | ◎ | |
| | | | | | | GI | ◎ | ◎ | ◎ | ◎ | ○ | ◎ | ◎ | |
| 3 | A-1 (90) | B-1 (10) | MAA:18, HEA :0.3 MMA:22, n-BA:59.7 | 60 | 40< | EG | ◎ | ◎ | ◎ | ◎ | ○ | ◎ | ◎ | |
| | | | | | | GI | ◎ | ○ | ○ | ◎ | ◎ | ◎ | ◎ | |
| 4 | A-1 (50) | B-2 (50) | MAA:10, HEA :2.5 MMA:30, n-BA:57.5 | 60 | 35 | EG | ◎ | ◎ | ◎ | ○ | ◎ | ◎ | ◎ | |
| | | | | | | GI | ◎ | ◎ | ◎ | ○ | ○ | ◎ | ◎ | |
| 5 | A-2 (50) | B-1 (50) | MAA:15, HEA :1.5 MMA:30, n-BA:53.5 | 60 | 40< | EG, SZ, AL | ◎ | ◎ | ◎ | ○ | ○ | ◎ | ◎ | |
| | | | | | | GI | ◎ | ◎ | ◎ | ○ | ○ | ◎ | ◎ | |
| 6 | A-2 (80) | B-1 (20) | MAA:24, HEA :0.6 MMA:24, n-BA:51.4 | 60 | 40< | EG, SZ, AL | ◎ | ◎ | ◎ | ◎ | ○ | ◎ | ◎ | |
| | | | | | | GI | ◎ | ○ | ○ | ◎ | ○ | ◎ | ◎ | |
| 7 | A-2 (90) | B-2 (10) | MAA:27, HEA :0.5 MMA:22, n-BA:50.5 | 60 | 35 | EG | ◎ | ◎ | ◎ | ○ | ○ | ◎ | ◎ | |
| | | | | | | GI | ◎ | ◎ | ◎ | ○ | ○ | ◎ | ◎ | |
| 8 | A-3 (60) | B-1 (40) | AA :12, HEA :1.2 MMA:28, n-BA:58.8 | 60 | 40< | CR | ◎ | ◎ | ◎ | ○ | ◎ | ◎ | ◎ | |
| 9 | A-3 (70) | B-1 (30) | AA :14, HEA :0.9 MMA:26, n-BA:59.1 | 60 | 40< | SZ, AL | ◎ | ◎ | ◎ | ◎ | ◎ | ◎ | ◎ | |
| 10 | A-4 (50) | B-2 (50) | AA :15, HEA :2.5 MMA:30, n-BA:52.5 | 60 | 35 | EG | ◎ | ◎ | ◎ | ○ | ◎ | ◎ | ◎ | |
| | | | | | | GI | ◎ | ○ | ○ | ○ | ◎ | ◎ | ◎ | |
| 11 | A-1 (30) | B-1 (70) | MAA: 6, HEA :2.1 MMA:34, n-BA:57.9 | 60 | 30 | EG | △ | △ | △ | △ | △ | ○ | ○ | Comp. Ex. |
| | | | | | | GI | △ | △ | △ | × | △ | ○ | ○ | |
| 12 | A-2 (50) | B-3 (50) | MAA:15, HEA :5 MMA:30, n-BA:50 | 60 | 7 | EG | △ | × | × | × | △ | ○ | ○ | |
| | | | | | | GI | △ | × | × | × | △ | ○ | ○ | |
| 13 | none | none | ―――― | 60 | − | EG | ○ | ◎ | ◎ | × | × | △ | △ | |
| | | | | | | GI | ○ | ◎ | ◎ | × | × | △ | △ | |

Example 6

(1) Synthesis of organic polymer emulsion

An organic polymer comprising the main component as shown as 1-9 in Table 12 was copolymerized with acrylic acid. As to the component indicated in plurality in the Table, equivalent amounts thereof were used. Deionized water (500 parts) was placed in a reaction tank, and heated to a liquid temperature of 60°C. A mixture (300 parts) of a monomer shown as 1-9 in Table 12 and acrylic acid, ammonium persulfate (3 parts) dissolved in deionized water (97 parts), and acid sodium sulfite (3 parts) dissolved in deionized water (97 parts) were simultaneously added dropwise thereto with stirring over 2 hours, and the mixture was stirred at 60°C for 3 hours to allow polymerization, whereby an emulsion was synthesized.

As regards 10-13 in Table 12, synthesis proceeded according to the following steps using an emulsifier. As the emulsifier, an aqueous solution of sodium dodecylbenzenesulfonate (6 parts) was added to deionized water (494 parts) and the mixture was heated to a liquid temperature of 60°C. The monomer (300 parts) as shown as 10-13 in Table 12, ammonium persulfate (3 parts) dissolved in deionized water (97 parts), and acidic sodium sulfite (3 parts) dissolved in deionized water (97 parts) were simultaneously added dropwise thereto with stirring over 2 hours, and the mixture was stirred at 60°C for 3 hours to allow polymerization, whereby an emulsion was prepared.

While 14-31 of Table 12 used the same organic polymer as in 1, 2 and 6, they differ in the metal plate to which the resin chromate composition was applied.

(2) Resin chromate composition

A bath of a resin chromate composition containing an anhydrous chromic acid (reduction percentage 0%) in a proportion of 15 g/ℓ when converted to $CrO_3$, phosphoric acid in a proportion of 18 g/ℓ when converted to $H_3PO_4$, and an organic polymer emulsion in a solid content 75 g/ℓ was prepared.

(3) Kind of metal plate

EG, GI, SZ, CR and aluminum plate (A), titanium plate (TI), silicon steel plate (SI) were used. The size was 180 mm×300 mm.

(4) Method of chromate treatment

The surface of the metal plates was cleaned and the metal plates were immersed in a resin chromate bath. The coating weight was adjusted with air knife to 40 mg/m$^2$ when converted to metal Cr. The samples were dried at a plate arrival temperature of 60°C. The film thickness was about 0.5 μm.

(5) Sensory evaluation of putrefying odor from metal plate

Twenty metal plates after chromate treatment were superimposed such that the treated surfaces came into contact, and four corners were fixed with vices, which was followed by standing at room temperature for one week. The vices were released and the treated surfaces were placed open. Immediately thereafter, 10 testing persons checked the presence or absence of a putrefying odor and ride evaluation following the criteria below.

○ : less than two persons smelled putrefying odor
△ : two to less than five persons smelled putrefying odor
X : five or more persons smelled putrefying odor

(6) Quantitative determination of odor component in resin chromate composition and sensory evaluation of putrefying odor

A resin chromate solution (100 ml) was taken and preserved at 50°C for one week. The components in the bath were quantitatively analyzed by gas chromatography/mass spectrometry (GC/MS). Ten testing persons checked the presence or absence of a putrefying odor. The evaluation criteria were the same as in (5) above.

The results are shown in Tables 12 and 13. Table 12 shows the analysis results of lower carboxylic acid of 1-13 of Table 13 produced in the bath. When the monomer component synthesized by primary alcohol having 3 to 7 carbon atoms was contained in the organic polymer, every metal plate generated a putrefying odor. As to the monomer component, the chromate baths showed production of the corresponding lower monocarboxylic acids, and the baths had a putrefying odor.

Table 12

| No. | kind of metal plate | dispersion of organic polymer in aqueous solution | main component of organic polymer * | putrefying odor of metal plate |
|---|---|---|---|---|
| 1 | EG | copolymerization with hydrophilic monomer | i-PA, 2 EHA | ○ |
| 2 | | | s-BA, 2 EHA | ○ |
| 3 | | | s-BA, t-BA | ○ |
| 4 | | | i-PA, MMA | ○ |
| 5 | | | i-PA, St, EA | ○ |
| 6 | | | n-BA, MMA | X |
| 7 | | | n-PA, n-PnA, MMA | X |
| 8 | | | n-HxA, n-HpA | X |
| 9 | | | AAD, 2 EHA, s-BA | ○ |
| 10 | | dispersion by addition of emulsifier | VOc | ○ |
| 11 | | | 2 EHV | ○ |
| 12 | | | LMA, i-PA | ○ |
| 13 | | | LMA, t-BA | ○ |
| 14 | GI | copolymerization with hydrophilic monomer | i-PA, 2 EHA | ○ |
| 15 | | | s-BA, 2 EHA | ○ |
| 16 | | | n-BA, MMA | X |
| 17 | SZ | | i-PA, 2 EHA | ○ |
| 18 | | | S-BA, 2 EHA | ○ |
| 19 | | | n-BA, MMA | X |
| 20 | CR | | i-PA, 2 EHA | ○ |
| 21 | | | s-BA, 2 EHA | ○ |
| 22 | | | n-BA, MMA | X |
| 23 | A | | i-PA, 2 EHA | ○ |
| 24 | | | s-BA, 2 EHA | ○ |
| 25 | | | n-BA, MMA | X |
| 26 | TI | | i-PA, 2 EHA | ○ |
| 27 | | | s-BA, 2 EHA | ○ |
| 28 | | | n-BA, MMA | X |
| 29 | SI | | i-PA, 2 EHA | ○ |
| 30 | | | s-BA, 2 EHA | ○ |
| 31 | | | n-BA, MMA | X |

* corresponding to abbreviations in Table 1

Table 13

| No. | main component of organic polymer *1 | lower carboxylic acid produced in bath *2 | | | | | putrefying odor of bath |
|---|---|---|---|---|---|---|---|
| | | propionic acid | butyric acid | valeric acid | capronic acid | heptanic acid | |
| 1 | i-PA, 2 EHA | - | - | - | - | - | ○ |
| 2 | s-BA, 2 EHA | - | - | - | - | - | ○ |
| 3 | s-BA, t-BA | - | - | - | - | - | ○ |
| 4 | i-PA, MMA | - | - | - | - | - | ○ |
| 5 | i-PA, St, EA | - | - | - | - | - | ○ |
| 6 | n-BA, MMA | - | + | - | - | - | X |
| 7 | n-PA, n-PnA, MMA | + | - | + | - | - | X |
| 8 | n-HxA, n-HpA | - | - | - | + | + | X |
| 9 | AAD, 2 EHA, s-BA | - | - | - | - | - | ○ |
| 10 | VOc | - | - | - | - | - | ○ |
| 11 | 2 EHV | - | - | - | - | - | ○ |
| 12 | LMA, i-PA | - | - | - | - | - | ○ |
| 13 | LMA, t-BA | - | - | - | - | - | ○ |

*1 : corresponding to abbreviations in Table 1
*2
- : background noise level as detected by GC-MS
+ : not less than 10 times greater background noise as detected by GC-MS

Example 7

(1) Synthesis of organic polymer

The organic polymers shown in Tables 14 and 15 were polymerized without an emulsifier. The synthetic method was the same as that used for Nos. 1-9 in Example 6.

(2) Resin chromate composition

A bath of a resin chromate composition containing a partially reduced chromic acid (reduction percentage 50%) in a proportion of 20 g/ℓ when converted to $CrO_3$, phosphoric acid in a proportion of 40 g/ℓ when converted to $H_3PO_4$, the organic polymer emulsion in a solid content of 100 g/ℓ and colloidal silica in a proportion of 33 g/ℓ when converted to $SiO_2$ was prepared.

(3) Kind of metal plate

EG was used.

(4) Method of chromate treatment

Using a reverse coater, the coating weight was adjusted to 50 mg/m$^2$ when converted to metal Cr, and samples were dried at a plate arrival temperature of 60°C. The film thickness was about 0.7 μm.

(5) Method for evaluation of properties

In the same manner as in Example 1 and Example 6, evaluation was performed with regard to the following items, wherein differences from the preceding Examples are indicated in the parentheses.

Odor from metal plate, stability of bath, corrosion resistance (salt water spraying period 8 days), corrosion resistance at processed part (salt water spraying period 4 days), elution of chromium, paint adhesion, alkali resistance, tone, resistance to fingerprints.

The results are shown in Table 16. As is evident from the Table, the products of the present invention were superior in every property mentioned above.

Table 14

| symbol | composition of organic polymer (wt%) | | | Tg (°C) | note |
|---|---|---|---|---|---|
| | component related to odor *1 | carboxylic acid component *2 | hydroxyl group-containing component *3 | | |
| A' | i-PA 88 | MAA 12 | none | 6.2 | Ex. of Pres. Inv. |
| B' | i-PA 85 | MAA 15 | none | 9.2 | " |
| C' | i-PA 80 | MAA 20 | none | 14.2 | " |
| D' | i-PA 95 | MAA 5 | none | -0.3 | Comp. Ex. |
| E' | 2 EHA 10 i-PA 78 | MAA 12 | none | -5.5 | Ex. of Pres. Inv. |
| F' | 2 EHA 19 i-PA 69 | MAA 12 | none | -15.4 | " |
| G | 2 EHA 19 i-PA 66 | MAA 15 | none | -12.9 | " |
| H | 2 EHA 19 i-PA 61 | MAA 20 | none | -8.6 | " |
| I | 2 EHA 19 i-PA 51 | MAA 29.9 | none | 0.4 | " |
| J | 2 EHA 19 i-PA 46 | MAA 35 | none | 5.1 | Comp. Ex. |
| K | 2 EHA 19 i-PA 65 | MAA 15 | HEA 1.0 | -13.1 | Ex. of Pres. Inv. |
| L | 2 EHA 19 i-PA 64 | MAA 15 | HEA 2.0 | -13.2 | " |
| M | 2 EHA 19 i-PA 63 | MAA 15 | HEA 2.9 | -13.3 | " |
| N | 2 EHA 19 i-PA 61 | MAA 15 | HEA 5.0 | -13.4 | Comp. Ex. |
| O | LMA 20 i-PA 65 | AA 15 | none | -8.6 | Ex. of Pres. Inv. |
| P | LMA 20 t-BA 65 | AA 15 | none | 19.9 | " |
| Q | LMA 40 St 45 | AA 15 | none | 10.7 | " |
| R | LMA 40 MMA 45 | AA 15 | none | 12.0 | " |
| S | 2 EHA 30 s-BA 60 | MAA 10.1 | none | -36.8 | " |
| V' | s-BA 95 | MAA 5 | none | -17.1 | Comp. Ex. |
| W' | s-BA 90 | MAA 10 | none | -12.1 | Ex. of Pres. Inv. |
| X' | s-BA 85 | MAA 15 | none | -6.8 | " |
| Y' | s-BA 80 | MAA 20 | none | -1.4 | " |
| Z' | s-BA 70 | MAA 29.9 | none | 10.0 | " |

*1 abbreviations : see Table 1
*2
MAA : methacrylic acid
AA : acrylic acid
*3 HEA : 2-hydroxyethyl acrylate

Table 15

| symbol | composition of organic polymer (wt%) | | | Tg (°C) | note |
|---|---|---|---|---|---|
| | component related to odor *1 | carboxylic acid component *2 | hydroxyl group-containing component *3 | | |
| AA | 2 EHA 5 s-BA 83 | MAA 12 | none | -14.5 | Ex. of Pres. Inv. |
| AB | 2 EHA 5 s-BA 80 | MAA 15 | none | -11.6 | " |
| AC | 2 EHA 5 s-BA 77 | MAA 18 | none | -8.4 | " |
| AD | 2 EHA 10 s-BA 78 | MAA 12 | none | -18.9 | " |
| AE | 2 EHA 10 s-BA 75 | MAA 15 | none | -16.1 | " |
| AF | 2 EHA 10 s-BA 72 | MAA 18 | none | -13.0 | " |
| AG | 2 EHA 15 s-BA 73 | MAA 12 | none | -23.1 | " |
| AH | 2 EHA 15 s-BA 70 | MAA 15 | none | -20.4 | " |
| AI | 2 EHA 15 s-BA 67 | MAA 18 | none | -17.4 | " |
| AJ | 2 EHA 15 s-BA 65 | MAA 20 | none | -15.5 | " |
| AK | 2 EHA 15 s-BA 55 | MAA 29.9 | none | 5.2 | " |
| AL | 2 EHA 15 s-BA 50 | MAA 35 | none | 0.3 | Comp. Ex. |
| AM | 2 EHA 15 s-BA 64 | MAA 20 | HEA 1.0 | -15.4 | Ex. of Pres. Inv. |
| AN | 2 EHA 15 s-BA 63 | MAA 20 | HEA 2.0 | -15.4 | Ex. of Pres. Inv. |
| AO | 2 EHA 15 s-BA 62 | MAA 20 | HEA 2.9 | -15.3 | " |
| AP | 2 EHA 15 s-BA 60 | MAA 20 | HEA 5.0 | -15.2 | Comp. Ex. |
| AQ | t-BA 10 s-BA 78 | MAA 12 | none | -4.3 | Ex. of Pres. Inv. |
| AR | t-BA 10 s-BA 72 | MAA 18 | none | 2.4 | " |
| AS | t-BA 10 s-BA 55 | MAA 35 | none | 23.2 | Comp. Ex. |
| AT | 2 EHA 10 n-BA 10 s-BA 58 | AA 20 | GMA 2 | -16.0 | Ex. of Pres. Inv. |
| AU | 2 EHA 10 n-BA 20 s-BA 48 | AA 20 | GMA 2 | -19.7 | " |
| AV | 2 EHA 10 n-BA 30 s-BA 38 | AA 20 | GMA 2 | -23.4 | " |

*1 abbreviations : see Table 1
*2
MAA : methacrylic acid
AA : acrylic acid
*3
HEA : 2-hydroxyethyl acrylate
GMA : glycidyl methacrylate

Table 16

| No. | sample mode | | | property evaluation | | | | | | | | | note |
|---|---|---|---|---|---|---|---|---|---|---|---|---|---|
| | organic polymer | metal plate | coating weight of Cr (mg/m²) | stability of bath (days) | corrosion resistance | corrosion resistance at processed part | elution of Cr | adhesion to paint | alkali resistance | tone | resistance to fingerprint | odor of metal plate | |
| 1 | A' | EG | 50 | 30< | ◎ | ○ | ○ | ○ | ◎ | ◎ | ◎ | ○ | Ex. |
| 2 | B' | EG | 50 | 30< | ○ | △ | ○ | ○ | ○ | ◎ | ◎ | ○ | 〃 |
| 3 | C' | EG | 50 | 30< | △ | △ | ○ | ◎ | △ | ◎ | ◎ | ○ | 〃 |
| 4 | D' | EG | 50 | 30< | ◎ | ◎ | ○ | × | ◎ | ◎ | ◎ | ○ | Co. |
| 5 | E' | EG | 50 | 30< | ○ | ○ | ○ | ○ | ○ | ◎ | ◎ | ○ | Ex. |
| 6 | F' | EG | 50 | 30< | ◎ | ◎ | ○ | ○ | ○ | ◎ | ◎ | ○ | 〃 |
| 7 | G | EG | 50 | 30< | ○ | ○ | ○ | ○ | ○ | ◎ | ◎ | ○ | 〃 |
| 8 | J | EG | 50 | 30< | × | × | ○ | ◎ | × | ◎ | ◎ | ○ | Co. |
| 9 | S | EG | 50 | 30< | ◎ | ◎ | ○ | △ | ◎ | ◎ | △ | ○ | Ex. |
| 10 | V' | EG | 50 | 30< | ◎ | ◎ | ○ | × | ◎ | ◎ | ◎ | ○ | Co. |
| 11 | W' | EG | 50 | 30< | ◎ | ◎ | ○ | △ | ◎ | ◎ | ◎ | ○ | Ex. |
| 12 | X' | EG | 50 | 30< | ◎ | ○ | ○ | ○ | ○ | ◎ | ◎ | ○ | 〃 |

Ex. : Example of Present Invention Co. : Comparative Example (to be continued)

Table 16

| No. | sample mode | | | property evaluation | | | | | | | | | note |
|---|---|---|---|---|---|---|---|---|---|---|---|---|---|
| | organic polymer | metal plate | coating weight of Cr (mg/m²) | stability of bath (days) | corrosion resistance | corrosion resistance at processed part | elution of Cr | adhesion to paint | alkali resistance | tone | resistance to fingerprint | odor of metal plate | |
| 13 | Y' | EG | 50 | 30< | ○ | △ | ○ | ◎ | △ | ◎ | ◎ | ○ | 〃 |
| 14 | Z' | EG | 50 | 30< | △ | △ | ○ | ◎ | △ | ◎ | ◎ | ○ | 〃 |
| 15 | AA | EG | 50 | 30< | ◎ | ◎ | ○ | ○ | ○ | ◎ | ◎ | ○ | 〃 |
| 16 | AB | EG | 50 | 30< | ○ | ○ | ○ | ○ | ○ | ◎ | ◎ | ○ | 〃 |
| 17 | AC | EG | 50 | 30< | ○ | ○ | ○ | ◎ | ○ | ◎ | ◎ | ○ | 〃 |
| 18 | AE | EG | 50 | 30< | ○ | ○ | ○ | ○ | ○ | ◎ | ◎ | ○ | 〃 |
| 19 | AF | EG | 50 | 30< | ○ | ○ | ○ | ◎ | ○ | ◎ | ◎ | ○ | 〃 |
| 20 | AI | EG | 50 | 30< | ○ | ○ | ○ | ◎ | ○ | ◎ | ◎ | ○ | 〃 |
| 21 | AM | EG | 50 | 30< | △ | △ | ○ | ◎ | △ | ◎ | ◎ | ○ | 〃 |
| 22 | AN | EG | 50 | 29 | △ | △ | ○ | ◎ | △ | ◎ | ◎ | ○ | 〃 |
| 23 | AO | EG | 50 | 27 | △ | △ | ○ | ◎ | △ | ◎ | ◎ | ○ | 〃 |
| 24 | AP | EG | 50 | 18 | △ | × | ◎ | ◎ | ○ | ◎ | ◎ | ○ | Co. |

Ex. : Example of Present Invention Co. : Comparative Example

Example 8

(1) Synthesis of organic polymer

The organic polymers shown in Tables 14 and 15 were used.

(2) Resin chromate composition

A bath of a resin chromate composition containing a partially reduced chromic acid (reduction percentage 40%) in a proportion of 50 g/ℓ when converted to $CrO_3$, phosphoric acid in a proportion of 90 g/ℓ when converted to $H_3PO_4$, an organic polymer emulsion in a solid content of 120 g/ℓ and colloidal silica in a proportion of 50 g/ℓ when converted to $SiO_2$ was prepared.

(3) Kind of metal plate

GI, GA and SZ were used.

(4) Method of chromate treatment

Using a wringer roll, the coating weight was adjusted to 65 mg/m$^2$ when converted to metal Cr, and samples were dried at a plate arrival temperature of 80°C. The film thickness was about 0.5 μm.

(5) Method for evaluation of properties

Evaluated in the same manner as in Example 7.

The results are shown in Tables 17 and 18. As is evident from the Tables, the products of the present invention showed superior properties when applied to any of the metal plates, and when the amount of the components which produced oxidation product with chromic acid was not more than 20 wt% in the organic polymer, a putrefying odor could be suppressed.

Table 17

| No. | sample mode | | | property evaluation | | | | | | | | | note |
|---|---|---|---|---|---|---|---|---|---|---|---|---|---|
| | organic polymer | metal plate | coating weight of Cr ($mg/m^2$) | stability of bath (days) | corrosion resistance | corrosion resistance at processed part | elution of Cr | adhesion to paint | alkali resistance | tone | resistance to fingerprint | odor of metal plate | |
| 1 | E' | GI | 65 | 30< | ◎ | ○ | ○ | ○ | ○ | ◎ | ◎ | ○ | Ex. |
| 2 | F' | GI | 65 | 30< | ◎ | ○ | ○ | ○ | ○ | ◎ | ◎ | ○ | 〃 |
| 3 | G | GI | 65 | 30< | ◎ | ○ | ○ | ○ | ○ | ◎ | ◎ | ○ | 〃 |
| 4 | H | GI | 65 | 30< | ○ | △ | ○ | ◎ | ○ | ◎ | ◎ | ○ | 〃 |
| 5 | I | GI | 65 | 30< | △ | △ | ○ | ◎ | △ | ◎ | ◎ | ○ | 〃 |
| 6 | K | GI | 65 | 30< | ○ | ○ | ○ | ○ | ○ | ◎ | ◎ | ○ | 〃 |
| 7 | L | GI | 65 | 29 | ○ | ○ | ○ | ○ | ○ | ◎ | ◎ | ○ | 〃 |
| 8 | M | GI | 65 | 27 | ○ | △ | ○ | ○ | ○ | ◎ | ◎ | ○ | 〃 |
| 9 | N | GI | 65 | 18 | ○ | × | ◎ | ○ | ◎ | ◎ | ◎ | ○ | Co. |
| 10 | O | GI | 65 | 30< | ○ | ○ | ○ | ○ | ○ | ◎ | ◎ | ○ | Ex. |
| 11 | P | GI | 65 | 30< | △ | △ | ○ | ◎ | △ | ◎ | ◎ | ○ | 〃 |
| 12 | Q | GI | 65 | 30< | ○ | △ | ○ | ○ | ○ | ◎ | ◎ | ○ | 〃 |
| 13 | R | GI | 65 | 30< | ○ | △ | ○ | ○ | ○ | ◎ | ◎ | ○ | 〃 |

Ex. : Example of Present Invention Co. : Comparative Example

(to be continued)

Table 17

| No. | sample mode | | | property evaluation | | | | | | | | | note |
|---|---|---|---|---|---|---|---|---|---|---|---|---|---|
| | organic polymer | metal plate | coating weight of Cr ($mg/m^2$) | stability of bath (days) | corrosion resistance | corrosion resistance at processed part | elution of Cr | adhesion to paint | alkali resistance | tone | resistance to fingerprint | odor of metal plate | |
| 14 | AD | GI | 65 | 30< | ◎ | ○ | ○ | ○ | ○ | ◎ | ◎ | ○ | Ex. |
| 15 | AG | GI | 65 | 30< | ◎ | ○ | ○ | ○ | ○ | ◎ | ○ | ○ | 〃 |
| 16 | AH | GI | 65 | 30< | ○ | ○ | ○ | ○ | ○ | ◎ | ○ | ○ | 〃 |
| 17 | AI | GI | 65 | 30< | ○ | ○ | ○ | ○ | ○ | ◎ | ◎ | ○ | 〃 |
| 18 | AJ | GI | 65 | 30< | ○ | △ | ○ | ◎ | △ | ◎ | ◎ | ○ | 〃 |
| 19 | AK | GI | 65 | 30< | △ | △ | ○ | ◎ | △ | ◎ | ◎ | ○ | 〃 |
| 20 | AL | GI | 65 | 30< | × | × | ○ | ◎ | × | ◎ | ◎ | ○ | Co. |
| 21 | AQ | GI | 65 | 30< | ◎ | ○ | ○ | ○ | ○ | ◎ | ◎ | ○ | Ex. |
| 22 | AR | GI | 65 | 30< | ○ | ○ | ○ | ○ | ○ | ◎ | ◎ | ○ | 〃 |
| 23 | AS | GI | 65 | 30< | × | × | ○ | ◎ | × | ◎ | ◎ | ○ | Co. |
| 24 | AT | GI | 65 | 30< | ○ | ○ | ○ | ◎ | △ | ◎ | ◎ | ○ | Ex. |
| 25 | AU | GI | 65 | 30< | ○ | ○ | ○ | ◎ | △ | ◎ | ◎ | △ | 〃 |
| 26 | AV | GI | 65 | 30< | ○ | ○ | ○ | ◎ | △ | ◎ | ◎ | × | 〃 |

Ex. : Example of Present Invention Co. : Comparative Example

Table 18

| No. | sample mode | | | property evaluation | | | | | | | | | note |
|---|---|---|---|---|---|---|---|---|---|---|---|---|---|
| | organic polymer | metal plate | coating weight of Cr (mg/m²) | stability of bath (days) | corrosion resistance | corrosion resistance at processed part | elution of Cr | adhesion to paint | alkali resistance | tone | resistance to fingerprint | odor of metal plate | |
| 1 | E' | GA | 65 | 30< | ◎ | ◎ | △ | ○ | ○ | ◎ | ◎ | ○ | Ex. |
| 2 | F' | GA | 65 | 30< | ◎ | ◎ | △ | ○ | ○ | ◎ | ◎ | ○ | 〃 |
| 3 | G | GA | 65 | 30< | ◎ | ◎ | △ | ◎ | ○ | ◎ | ◎ | ○ | 〃 |
| 4 | H | GA | 65 | 30< | ○ | ○ | △ | ◎ | △ | ◎ | ◎ | ○ | 〃 |
| 5 | I | GA | 65 | 30< | △ | △ | △ | ◎ | △ | ◎ | ◎ | ○ | 〃 |
| 6 | J | GA | 65 | 30< | × | × | △ | ◎ | × | ◎ | ◎ | ○ | Co. |
| 7 | AA | GA | 65 | 30< | ◎ | ◎ | △ | ○ | ○ | ◎ | ◎ | ○ | Ex. |
| 8 | AB | GA | 65 | 30< | ○ | ◎ | △ | ◎ | ○ | ◎ | ◎ | ○ | 〃 |
| 9 | AC | GA | 65 | 30< | ○ | ◎ | △ | ◎ | ○ | ◎ | ◎ | ○ | 〃 |
| 10 | AD | GA | 65 | 30< | ◎ | ◎ | △ | ○ | ○ | ◎ | ◎ | ○ | 〃 |
| 11 | AE | GA | 65 | 30< | ○ | ◎ | △ | ◎ | ○ | ◎ | ◎ | ○ | 〃 |
| 12 | AF | GA | 65 | 30< | ○ | ◎ | △ | ◎ | ○ | ◎ | ◎ | ○ | 〃 |
| 13 | AT | GA | 65 | 30< | ○ | ○ | ○ | ◎ | △ | ◎ | ◎ | ○ | 〃 |
| 14 | AU | GA | 65 | 30< | ○ | ○ | ○ | ◎ | △ | ◎ | ◎ | ○ | 〃 |
| 15 | AV | GA | 65 | 30< | ○ | ○ | ○ | ◎ | △ | ◎ | ◎ | △ | 〃 |

Ex. : Example of Present Invention   Co. : Comparative Example   (to be continued)

Table 18

| No. | sample mode | | | property evaluation | | | | | | | | | note |
|---|---|---|---|---|---|---|---|---|---|---|---|---|---|
| | organic polymer | metal plate | coating weight of Cr (mg/m²) | stability of bath (days) | corrosion resistance | corrosion resistance at processed part | elution of Cr | adhesion to paint | alkali resistance | tone | resistance to fingerprint | odor of metal plate | |
| 16 | E | SZ | 65 | 30< | ◎ | ○ | ○ | △ | ○ | ◎ | ◎ | ○ | 〃 |
| 17 | F | SZ | 65 | 30< | ◎ | ○ | ○ | △ | ○ | ◎ | ◎ | ○ | 〃 |
| 18 | G | SZ | 65 | 30< | ◎ | ○ | ○ | △ | ○ | ◎ | ◎ | ○ | 〃 |
| 19 | H | SZ | 65 | 30< | ○ | △ | ○ | ○ | △ | ◎ | ◎ | ○ | 〃 |
| 20 | I | SZ | 65 | 30< | △ | △ | ○ | ○ | △ | ◎ | ◎ | ○ | 〃 |
| 21 | J | SZ | 65 | 30< | × | × | ○ | ○ | × | ◎ | ◎ | ○ | Co. |
| 22 | AA | SZ | 65 | 30< | ◎ | ○ | ○ | △ | ○ | ◎ | ◎ | ○ | Ex. |
| 23 | AB | SZ | 65 | 30< | ○ | ○ | ○ | △ | ○ | ◎ | ◎ | ○ | 〃 |
| 24 | AC | SZ | 65 | 30< | ○ | ○ | ○ | △ | ○ | ◎ | ◎ | ○ | 〃 |
| 25 | AE | SZ | 65 | 30< | ○ | ○ | ○ | △ | ○ | ◎ | ◎ | ○ | 〃 |
| 26 | AF | SZ | 65 | 30< | ○ | ○ | ○ | △ | ○ | ◎ | ◎ | ○ | 〃 |
| 27 | AT | SZ | 65 | 30< | ○ | △ | ○ | ○ | △ | ◎ | ◎ | ○ | 〃 |
| 28 | AU | SZ | 65 | 30< | ○ | △ | ○ | ○ | △ | ◎ | ◎ | △ | 〃 |
| 29 | AV | SZ | 65 | 30< | ○ | △ | ○ | ○ | △ | ◎ | ◎ | × | 〃 |

Ex. : Example of Present Invention　　Co. : Comparative Example

Example 9

(1) Synthesis of organic polymer emulsion

A' and X' of Table 14 were used.

(2) Water soluble/water dispersible additive

The following 6 kinds of additives were used, wherein the predetermined amounts of 1), 2), 4), 5) and 6) were mixed with the resin and stirred. As regards 3), a predetermined amount thereof was made to be contained in the resin by appropriately adjusting the synthetic method of the resin.

1) EC : ethylene carbonate
2) GTA : glutaric acid
3) OAA : acrylic acid oligomer (mixture having 2-20 repeating units)
4) PMAA : polymethacrylic acid (mixture having 30-50 repeating units)
5) GADM : dimethyl glutarate
6) NB : n-BA 88 wt% and MAA 12 wt% prepared into emulsion by synthetic method of Example 1

(3) Mixing of organic polymer emulsion and additive, and measurement of lowest film forming temperature

Predetermined amounts of an organic polymer emulsion and water soluble/water dispersible additives were mixed and stirred at normal temperature for one day. A small quantity thereof was used to measure the lowest film forming temperature.

(4) Resin chromate composition

Using the above-mentioned mixture, a bath of a resin chromate composition containing a partially reduced chromic acid (reduction percentage 55%) in a proportion of 9 g/ℓ when converted to $CrO_3$, phosphoric acid in a proportion of 18 g/ℓ when converted to $H_3PO_4$ and an organic polymer emulsion in a solid content of 54 g/ℓ was prepared.

The contents of the water soluble/water dispersible additives are shown in Table 19 and Table 20.

(5) Kind of metal plate

EG, GI, GA were used.

(6) Method of chromate treatment

Using a roll coater, a resin chromate composition was applied to metal plates and dried at plate temperature of 60°C. The coating weight of chromium was about 25 mg/m$^2$ and 50 mg/m$^2$, and the film thickness was about 0.4 μm and 0.8 μm.

(7) Items for evaluation of properties

In the same manner as in Example 1, corrosion resistance, corrosion resistance at processed part, paint adhesion, chromium elution, stability of bath were evaluated, wherein salt water spraying period in the corrosion resistance test was 10 days for EG and 15 days for GI and GA with regard to corrosion resistance; 10 days for EG and 15 days for GI and GA with regard to corrosion resistance at processed part; and 5 days for EG, GI and GA with regard to corrosion resistance at processed part.

The results are shown in Tables 19-20.

Table 19

| No. | mode of resin and additive | | | | mode of metal plate | | properties of metal plate | | | | | note *2 |
|---|---|---|---|---|---|---|---|---|---|---|---|---|
| | kind of resin | kind of additive | amount added (wt% *1) | lowest film-forming temperature of resin + additive (°C) | kind of metal plate | coating weight of Cr (mg/m²) | corrosion resistance | corrosion resistance at processed part | elution of chromium | durability of paint adhesion | odor | |
| 1 | A' | none | – | 16 | EG | 25 | △ | X | ○ | ○ | ○ | – |
| 2 | A' | none | – | 16 | EG | 50 | ○ | △ | ○ | ○ | ○ | – |
| 3 | A' | EC | 1 | 15 | EG | 25 | △ | X | ○ | ○ | ○ | △ |
| 4 | A' | EC | 5 | 7 | EG | 25 | ○ | ○ | ◎ | ○ | ○ | ◎ |
| 5 | A' | GTA | 2.5 | 14 | EG | 25 | ○ | △ | ○ | ○ | ○ | ○ |
| 6 | A' | GTA | 5 | 12 | EG | 25 | ○ | ○ | ◎ | ○ | ○ | ◎ |
| 7 | A' | GTA | 5 | 12 | EG | 50 | ◎ | ◎ | ◎ | ○ | ○ | ◎ |
| 8 | A' | GTA | 10 | 5 | EG | 50 | ◎ | ◎ | ◎ | ○ | ○ | ◎ |
| 9 | A' | OAA | 2 | 14 | EG | 25 | ○ | △ | ○ | ◎ | ○ | ◎ |
| 10 | A' | OAA | 2 | 14 | EG | 50 | ◎ | ○ | ○ | ◎ | ○ | ◎ |
| 11 | A' | PMAA | 2 | 16 | EG | 50 | X | X | ○ | ◎ | ○ | × |
| 12 | X' | none | – | 7 | EG | 25 | △ | X | ○ | ○ | ○ | – |

*1 net additive (wt%) relative to solid resin

(to be continued)

*2 Due to additive; × degradation of corrosion resistance; △ no effect; ○ improvement in corrosion resistance; ◎ additional improvement in other properties

Table 19

| No. | mode of resin and additive | | | | mode of metal plate | | properties of metal plate | | | | | note *2 |
|---|---|---|---|---|---|---|---|---|---|---|---|---|
| | kind of resin | kind of additive | amount added (wt% *1) | lowest film-forming temperature of resin + additive (°C) | kind of metal plate | coating weight of Cr (mg/m²) | corrosion resistance | corrosion resistance at processed part | elution of chromium | durability of paint adhesion | odor | |
| 13 | X' | none | – | 7 | EG | 50 | ○ | △ | ○ | ○ | ○ | – |
| 14 | X' | EC | 5 | not more than 0 | EG | 25 | ○ | ○ | ◎ | ○ | ○ | ◎ |
| 15 | X' | EC | 5 | not more than 0 | EG | 50 | ◎ | ◎ | ◎ | ○ | ○ | ◎ |
| 16 | X' | GADM | 5 | 3 | EG | 25 | ○ | ○ | ◎ | ○ | ○ | ◎ |
| 17 | X' | GADM | 5 | 3 | EG | 50 | ◎ | ◎ | ◎ | ○ | ○ | ◎ |
| 18 | X' | OAA | 2 | 5 | EG | 25 | ○ | ○ | ○ | ◎ | ○ | ◎ |
| 19 | X' | PMMA | 2 | 7 | EG | 25 | X | X | ○ | ◎ | ○ | × |
| 20 | X' | NB | 2 | 7 | EG | 25 | ○ | ○ | ○ | ○ | ○ | ○ |
| 21 | X' | NB | 5 | 7 | EG | 50 | ◎ | ◎ | ○ | ○ | ○ | ○ |

*1 net additive (wt%) relative to solid resin

*2 Due to additive; × degradation of corrosion resistance △ no effect

○ improvement in corrosion resistance ◎ additional improvement in other properties

Table 20

| No. | mode of resin and additive | | | | mode of metal plate | | properties of metal plate | | | | |
|---|---|---|---|---|---|---|---|---|---|---|---|
| | kind of resin | kind of additive | amount added (wt% *) | lowest film-forming temperature of resin + additive (°C) | kind of metal plate | coating weight of Cr ($mg/m^2$) | corrosion resistance | corrosion resistance at processed part | elution of chromium | durability of paint adhesion | stability of bath |
| 1 | A' | none | – | 16 | GI | 50 | ○ | ○ | ○ | ○ | not less than 20 |
| 2 | A' | GTA | 5 | 12 | GI | 50 | ◎ | ◎ | ◎ | ○ | not less than 20 |
| 3 | A' | GTA | 18 | not more than 0 | GI | 50 | ○ | ○ | ◎ | ○ | 20 |
| 4 | A' | GTA | 22 | not more than 0 | GI | 50 | △ | △ | ◎ | ○ | 15 |
| 5 | A' | OAA | 2 | 14 | GI | 50 | ◎ | ○ | ○ | ◎ | not less than 20 |
| 6 | A' | OAA | 22 | not more than 0 | GI | 50 | △ | △ | ○ | ◎ | 10 |
| 7 | X' | none | – | 7 | GI | 50 | △ | △ | ○ | ○ | not less than 20 |
| 8 | X' | GTA | 5 | 3 | GI | 50 | ○ | ○ | ◎ | ○ | not less than 20 |
| 9 | X' | GTA | 18 | not more than 0 | GI | 50 | ○ | ○ | ◎ | ○ | 20 |
| 10 | X' | OAA | 22 | not more than 0 | GI | 50 | △ | △ | ◎ | ◎ | 10 |

* net additive (wt%) relative to solid resin

(to be continued)

Table 20

| No. | mode of resin and additive | | | | mode of metal plate | | properties of metal plate | | | | |
|---|---|---|---|---|---|---|---|---|---|---|---|
| | kind of resin | kind of additive | amount added (wt% *) | lowest film-forming temperature of resin + additive (℃) | kind of metal plate | coating weight of Cr (mg/m²) | corrosion resistance | corrosion resistance at processed part | elution of chromium | durability of paint adhesion | stability of bath |
| 11 | A' | none | - | 16 | GA | 50 | ○ | ○ | △ | ◎ | not less than 20 |
| 12 | A' | GTA | 5 | 12 | GA | 50 | ◎ | ◎ | △ | ◎ | not less than 20 |
| 13 | A' | GTA | 18 | not more than 0 | GA | 50 | ○ | ○ | ○ | ◎ | 20 |
| 14 | A' | GTA | 22 | not more than 0 | GA | 50 | △ | △ | ○ | ◎ | 15 |
| 15 | A' | OAA | 2 | 14 | GA | 50 | ◎ | ○ | △ | ◎ | more than 20 |
| 16 | A' | OAA | 22 | not more than 0 | GA | 50 | △ | △ | △ | ◎ | 10 |
| 17 | X' | none | - | 7 | GA | 50 | △ | △ | △ | ◎ | not less than 20 |
| 18 | X' | GTA | 5 | 3 | GA | 50 | ○ | ○ | △ | ◎ | not less than 20 |
| 19 | X' | GTA | 18 | not more than 0 | GA | 50 | ○ | ○ | ○ | ◎ | 20 |
| 20 | X' | OAA | 22 | not more than 0 | GA | 50 | △ | △ | △ | ◎ | 10 |

* net additive (wt%) relative to solid resin

## Industrial Field of Utilization

The resin chromate composition of the present invention is superior in stability of bath and free of bad odor. Hence, it increases working efficiency but causes no problem to the working environment. The resin chromate-treated metal plate prepared from this composition does not generate a putrefying odor, and is superior in corrosion resistance, prohibiting elution of chromium, alkali resistance, adhesion to paint and appearance.

## Claims

1. A resin chromate composition comprising, as main components, (a) an organic polymer emulsion comprising the organic polymer comprising an unsaturated ethylene compound dispersed in an aqueous medium, (b) a water soluble chromium compound and (c) a mineral acid, wherein the organic polymer (a) comprises an unsaturated ethylene carboxylic acid component (a1) in a proportion of more than 10 wt% and less than 30 wt% of the weight of the organic polymer (a) (solid), a hydroxyl group-containing unsaturated ethylene compound component (a2) in a proportion of not less than 0 wt% and less than 3 wt% of the weight of the organic polymer (a) (solid), and an unsaturated ethylene compound component (a3) without a carboxylic group or a hydroxyl group in the remaining proportion.

2. The resin chromate composition of claim 1, wherein the organic polymer (a) comprises the unsaturated ethylene carboxylic acid component (a1) in a proportion of more than 10 wt% and less than 30 wt%, the hydroxyl group-containing unsaturated ethylene compound component (a2) in a proportion of not less than 0 wt% and less than 3 wt%, and the unsaturated ethylene compound component (a3) without a carboxylic group or a hydroxyl group in the remaining proportion.

3. The resin chromate composition of claim 1, wherein the organic polymer (a) is a mixture of an organic copolymer (A) comprising an unsaturated ethylene carboxylic acid component and an unsaturated ethylene compound component without a carboxyl group or a hydroxyl group, and an organic copolymer (B) comprising a hydroxyl group-containing unsaturated ethylene compound component and an unsaturated ethylene compound component without a carboxylic group or a hydroxyl group.

4. A resin chromate composition comprising, as main components, (a) an organic polymer emulsion comprising the organic polymer comprising an unsaturated ethylene compound dispersed in an aqueous medium, (b) a water soluble chromium compound and (c) a mineral acid, wherein a component producing a monocarboxylic acid having 3 to 7 carbon atoms in at least one member selected from the group consisting of an aqueous chromic acid solution and a chromate film is contained in a proportion of not more than 20 wt% of the organic polymer (a) (solid).

5. The resin chromate composition of claim 4, wherein, in the organic polymer (a), a component which does not produce a monocarboxylic acid having 3 to 7 carbon atoms comprises at least one member selected from the group consisting of an ester and an ether synthesized from primary alcohol having 1, 2 or 8 or more carbon atoms and a chain isomer thereof, an ester and an ether synthesized from any secondary alcohol and an ester and an ether synthesized from any tertiary alcohol, and a component which produces monocarboxylic acid having 3 to 7 carbon atoms comprises at least one compound selected from the group consisting of an ester and an ether synthesized from a primary alcohol having 3 to 7 carbon atoms and a chain isomer thereof.

6. The resin chromate composition of claim 5, wherein the component which does not produce a monocarboxylic acid having 3 to 7 carbon atoms is at least one member selected from the group consisting of an acrylate and a methacrylate.

7. The resin chromate composition of claim 5 or claim 6, wherein the organic polymer (a) comprises an unsaturated ethylene carboxylic acid component (a1) in a proportion of more than 10 wt% and less than 30 wt%, a hydroxyl group-containing unsaturated ethylene compound component (a2) in a proportion of not less than 0 wt% and less than 3 wt%, and an unsaturated ethylene compound component (a3) without a carboxylic group or a hydroxyl group in the remaining proportion.

8. A resin chromate composition comprising, as main components, (a) an organic polymer emulsion comprising the organic polymer comprising an unsaturated ethylene compound dispersed in an aqueous medium, (b) a water soluble chromium compound, (c) a mineral acid and (d) a water soluble or water dispersible additive, wherein an organic thin film prepared from a mixture of the organic polymer (a) and the water soluble or water dispersible additive (d) has the lowest film forming temperature of not more than 20°C and 2°C or more lower than the lowest film forming temperature of an organic thin film prepared from the organic polymer (a) alone.

9. The resin chromate composition of claim 8, wherein the organic polymer (a) comprises a component which produces a monocarboxylic acid having 3 to 7 carbon atoms in at least one member selected from the group consisting of an aqueous chromic acid solution and a chromate film, in a proportion of not more than 20 wt% of the weight of the organic polymer (a) (solid).

**10.** The resin chromate composition of claim 9, wherein the organic polymer (a) comprises an unsaturated ethylene carboxylic acid component (a1) in a proportion of more than 10 wt% and less than 30 wt%, a hydroxyl group-containing unsaturated ethylene compound component (a2) in a proportion of not less than 0 wt% and less than 3 wt%, and an unsaturated ethylene compound component (a3) without a carboxylic group or a hydroxyl group in the remaining proportion.

**11.** The resin chromate composition of claim 9, wherein the water soluble or water dispersible additive (d) is at least one member selected from the group consisting of a monocarboxylic acid compound having 8 or more carbon atoms, a derivative thereof, any polycarboxylic acid compound, a derivative thereof, an oligomer of any unsaturated carboxylic acid having 2 to 20 repeating units and a water soluble organic solvent having an amide or cyclic carbonate structure, and the proportion of the additive (d) is 20 wt% or less of the total weight of the organic polymer (a) (solid).

**12.** The resin chromate composition of any one of claims 1 to 11, wherein the organic polymer (a) has a total Tg value obtained from the following formula of not less than -40°C and not more than 20°C:

$$1/\text{total Tg} = \sum_{i=1}^{n} \phi_i/Tg_i \qquad (1)$$

wherein total Tg is Tg of the total organic polymer, $Tg_i$ is Tg of i component, $\phi_i$ is volume ratio of i component which is nearly the same as weight ratio, and n is the total number of monomer components.

**13.** A surface treated metal plate comprising a film of the resin chromate composition of any one of claims 1 to 12 on the metal plate, in a coating weight of 5-300 $mg/m^2$ when converted to metal chromium.

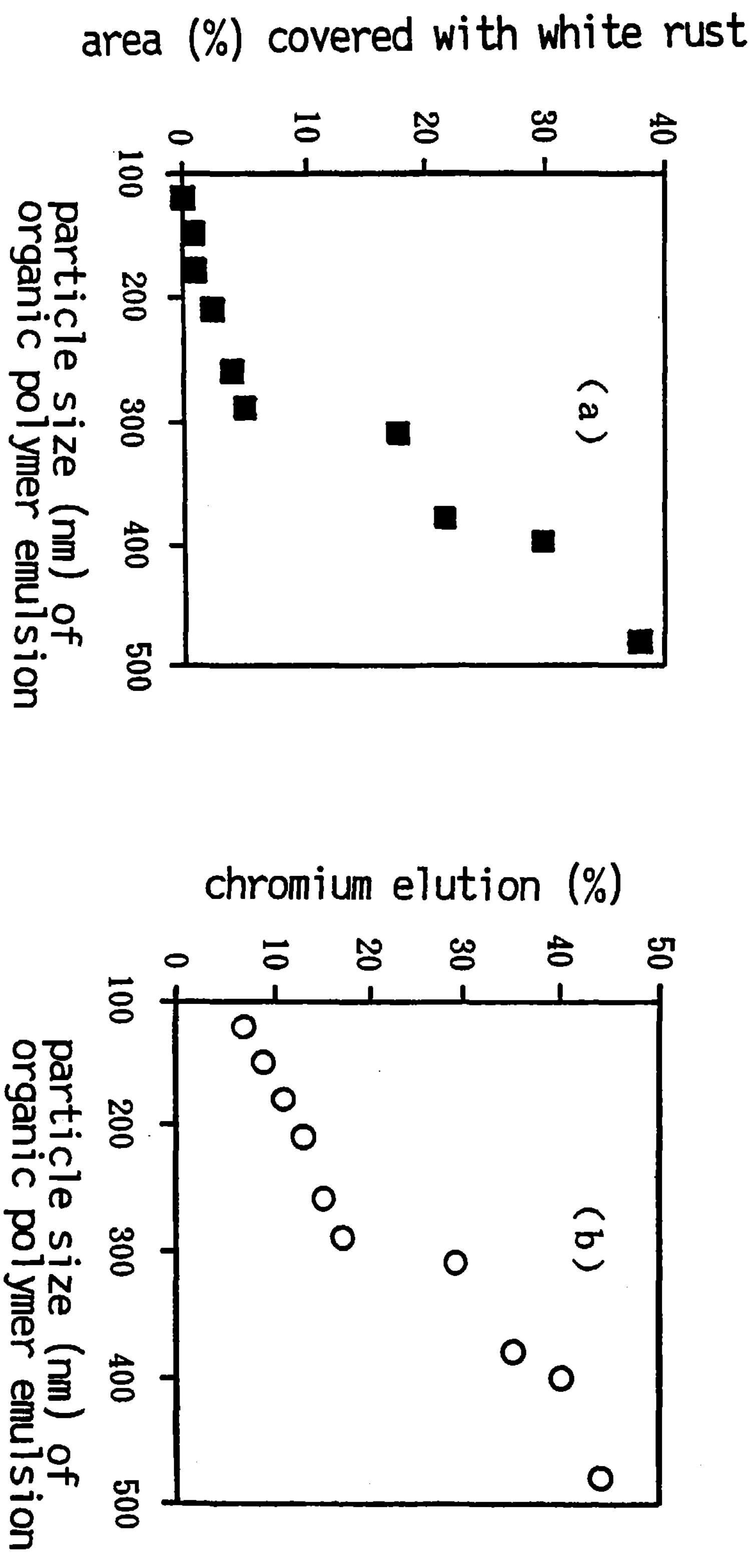
area (%) covered with white rust
0
10
20
30
40
100
200
300
400
500
(a)
particle size (nm) of
organic polymer emulsion
chromium elution (%)
0
10
20
30
40
50
100
200
300
400
500
(b)
particle size (nm) of
organic polymer emulsion

FIG. 1

## INTERNATIONAL SEARCH REPORT

International application No.
PCT/JP96/02270

**A. CLASSIFICATION OF SUBJECT MATTER**

Int. $Cl^6$ C23C22/28, C08L57/00

According to International Patent Classification (IPC) or to both national classification and IPC

**B. FIELDS SEARCHED**

Minimum documentation searched (classification system followed by classification symbols)

Int. $Cl^6$ C23C22/00-C23C22/86, C08L57/00-C08L57/12

Documentation searched other than minimum documentation to the extent that such documents are included in the fields searched

| | |
|---|---|
| Jitsuyo Shinan Koho | 1922 - 1996 |
| Kokai Jitsuyo Shinan Koho | 1971 - 1996 |
| Toroku Jitsuyo Shinan Koho | 1994 - 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 6-173025, A (Nihon Parkerizing Co., Ltd.), June 21, 1994 (21. 06. 94), Claim 1; column 5, lines 7 to 31; column 7, line 10 to column 9, line 24; example (Family: none) | 1 - 12 |
| Y | JP, 6-146002, A (Nihon Parkerizing Co., Ltd.), May 27, 1994 (27. 05. 94), Claim 1; column 2, line 47 to column 6, line 15; column 7, table 1 (Family: none) | 1 - 12 |
| Y | JP, 3-129086, A (Nihon Parkerizing Co., Ltd.), September 26, 1991 (26. 09. 91), Claims 1, 2; page 3, upper left column, line 1 to page 5, upper left column, line 7; example & US, 5378291, A & CN, 1053638, A | 1 - 12 |
| Y | JP, 1-172472, A (Nippon Paint Co., Ltd.), July 7, 1989 (07. 07. 89), Claims 1 to 3; page 3, lower right column, line 4 to page 9, lower right column, line 9 | 1 - 12 |

[X] Further documents are listed in the continuation of Box C. [ ] See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| November 29, 1996 (29. 11. 96) | December 10, 1996 (10. 12. 96) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP96/02270

C (Continuation). **DOCUMENTS CONSIDERED TO BE RELEVANT**

| Category* | Citation of document, with indication, where appropriate, of the relevant passages | Relevant to claim No. |
|---|---|---|
| | & EP, 322984, A | |
| P | JP, 8-60175, A (Nihon Parkerizing Co., Ltd.), March 5, 1996 (05. 03. 96), Claim 1; column 10, lines 2 to 17; column 9 (Family: none) | 1 - 12 |
| A | JP, 52-133837, A (Nippon Paint Co., Ltd.), November 9, 1977 (09. 11. 77), Claims 1 to 10; page 3, upper right column, line 13 to page 5, lower right column, line 1 & US, 4170671, A & DE, 2719558, C & GB, 1583103, A & BE, 854260, A | 1 - 12 |
| A | JP, 54-110145, A (Amchem Products Inc.), Augsut 29, 1979 (29. 08. 79), Claims 1, 4 & US, 4183772, A & DE, 2903311, C & GB, 2013726, B & CA, 1132887, A | 1 |

Form PCT/ISA/210 (continuation of second sheet) (July 1992)